(19) **Europäisches Patentamt**
**European Patent Office**
**Office européen des brevets**

(11) **EP 4 262 308 B1**

(12) # EUROPEAN PATENT SPECIFICATION

(45) Date of publication and mention
of the grant of the patent:
**01.10.2025  Bulletin 2025/40**

(21) Application number: **22745031.9**

(22) Date of filing: **11.01.2022**

(51) International Patent Classification (IPC):
**H04W 72/04** (2023.01)    **H04W 76/36** (2018.01)
**H04W 4/70** (2018.01)    **H04W 72/25** (2023.01)

(52) Cooperative Patent Classification (CPC):
**H04W 76/36; H04W 4/70;** H04W 72/25

(86) International application number:
**PCT/CN2022/071184**

(87) International publication number:
**WO 2022/161153 (04.08.2022 Gazette 2022/31)**

(54) **RESOURCE NEGOTIATION METHOD AND APPARATUS FOR SIDELINK COMMUNICATION**

RESSOURCENAUSHANDLUNGSVERFAHREN UND VORRICHTUNG FÜR
SIDELINK-KOMMUNIKATION

PROCÉDÉ ET APPAREIL DE NÉGOCIATION DE RESSOURCE POUR UNE COMMUNICATION DE
LIAISON LATÉRALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2021  CN 202110121292
18.05.2021  CN 202110542230**

(43) Date of publication of application:
**18.10.2023  Bulletin 2023/42**

(73) Proprietor: **Huawei Technologies Co., Ltd.
Shenzhen, Guangdong 518129 (CN)**

(72) Inventors:
• **PENG, Lan
Shenzhen, Guangdong 518129 (CN)**
• **LI, Xueru
Shenzhen, Guangdong 518129 (CN)**
• **HE, Hongli
Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
EP-A1- 3 879 893    WO-A1-2019/170084
WO-A1-2020/114129    CN-A- 109 152 040
CN-A- 110 248 412    CN-A- 110 830 952
CN-A- 111 988 236    US-A1- 2017 231 007

• **ERICSSON: "PHY layer procedures for NR
sidelink", vol. RAN WG1, no. Chongqing, China;
20191014 - 20191020, 7 October 2019
(2019-10-07), XP051808939, Retrieved from the
Internet <URL:https://ftp.3gpp.org/tsg_ran/
WG1_RL1/TSGR1_98b/Docs/R1-1910538.zip
R1-1910538 Ericsson - PHY layer procedures for
NR sidelink.docx> [retrieved on 20191007]**
• **TCL COMMUNICATION: "Views on
Sidelink_Enhancement Priorities for R17", 3GPP
DRAFT; RP-192834, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. TSG RAN, no. Sitges,
Spain; 20191209 - 20191212, 2 December 2019
(2019-12-02), Mobile Competence Centre ; 650,
route des Lucioles ; F-06921 Sophia-Antipolis
Cedex ; France
, XP051834435**

EP 4 262 308 B1

## Description

Priority is claimed to Chinese Patent Application No. 202110121292.4, filed with the China National Intellectual Property Administration on January 28, 2021 and entitled "CHANNEL RESOURCE CONTENTION METHOD", and to Chinese Patent Application No. 202110542230.0, filed with the China National Intellectual Property Administration on May 18, 2021 and entitled "RESOURCE NEGOTIATION METHOD AND APPARATUS FOR SIDELINK COMMUNICATION".

## TECHNICAL FIELD

This disclosure generally relates to the field of communication, and the invention more specifically relates to communication methods and communication apparatuses for resource negotiation and sidelink communication.

## BACKGROUND

Sidelink (sidelink, SL) communication is an important branch of a cellular internet of things technology, and is also referred to as device-to-device (device-to-device, D2D) communication. Currently, sidelink communication includes two resource allocation modes: a mode 1 and a mode 2. In the mode 1, a terminal device performs sidelink data transmission by using a sidelink resource granted by a network device to the terminal device. In the mode 2, the terminal device autonomously contends for a transmission resource in a preconfigured resource pool to perform sidelink data transmission.

However, according to a resource contention rule of the current mode 2, the terminal device may increase an interference measurement threshold, so that the terminal device can determine plenty of candidate resources for sidelink transmission. This may cause a resource selection collision of the terminal device, and cause large intra-system interference, thereby reducing reliability of sidelink communication.

Therefore, a current resource selection manner in which the terminal device autonomously selects a sidelink transmission resource needs to be optimized.

WO 2020/114129 A1 describes that with the development of communications technology, there is provided an Internet of Vehicles technology allowing vehicle-to-everything (V2X) communication. In this document, a third device receives first information and/or sidelink control information, the first information comprising indication information of a first resource set, the first resource set being used for receiving data, the sidelink control information comprising indication information of a second resource set, and the second resource set being used for transmitting data; determining an available resource in the first resource set; and/or determining an available resource in the second resource set. The disclosed method addresses the problem of a hidden node and an exposed node in a sidelink.

Another example is known from WO 2019/170084 A1.

## SUMMARY

The object of the present invention is to provide communication methods and apparatuses for resource negotiation and sidelink communication, which may improve communication reliability. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

A first aspect according to the invention provides a resource negotiation method for sidelink communication. The method is performed by a first terminal device or a module (for example, although not claimed, a chip) configured (or used) in a first terminal device. The following explains how the method is performed by the first terminal device.

The method according to the invention includes: The first terminal device receives first information from a second terminal device. The first information is used to request the first terminal device to concede a part of a first resource of the first terminal device. The first terminal device sends second information to the second terminal device. The second information indicates that the first terminal device agrees to concede a part of the first resource for the second terminal device.

According to the foregoing solution, resource negotiation is performed between terminal devices, so that a probability of resource collision can be reduced, and communication reliability can be improved.

With reference to the first aspect, in some implementations of the first aspect, the first resource is specifically a resource used by the first terminal device or a first terminal device group. The first terminal device group includes the first terminal device.

According to the foregoing solution, the second terminal device may negotiate with the first terminal device to concede a part of a resource used by the first terminal device or the first terminal device group, so that the probability of resource collision can be reduced, and the communication reliability can be improved.

With reference to the first aspect, in some implementations of the first aspect, the first information is carried on a second resource. The second resource is included in the first resource. A location of the second resource in the first resource is predefined in a protocol or preconfigured in a network. Alternatively, the method further includes: The first terminal device sends third information. The third information indicates the second resource.

According to the foregoing solution, the location of the second resource carrying the first information is predefined in the protocol, preconfigured in the network, or notified by the first terminal device to the second terminal device, so that the first terminal device and the second terminal device may reach a consensus on the second resource carrying the first information.

With reference to the first aspect, in some implementations of the first aspect, the method further includes: The first terminal device sends a first message. The first message includes the third information and/or information that indicates one or more of the following: a time domain position of the first resource, a frequency domain position of the first resource, a period of the first resource, a priority of the first terminal device, a priority of the first terminal device group, or a period of the second resource. The first terminal device group includes the first terminal device.

According to the foregoing solution, the first terminal device may notify, by using the first message, another terminal device of information such as related configuration information of the resource used by the first terminal device, the priority of the first terminal device, or the priority of the first terminal device group, so that the another terminal device may determine, based on the first message, whether to perform resource negotiation with the first terminal device.

With reference to the first aspect, in some implementations of the first aspect, the first message is a broadcast message.

According to the foregoing solution, the first terminal device broadcasts the first message. This avoids the first message being separately sent to each terminal device, reduces overheads, and improves resource utilization.

With reference to the first aspect, in some implementations of the first aspect, the first information includes information indicating one or more of the following: a priority of the second terminal device, a priority of a second terminal device group, a priority or priorities of one or more services of the second terminal device, a priority or priorities of one or more services of the second terminal device group, a data volume of the second terminal device, or a data volume of the second terminal device group. The second terminal device group includes the second terminal device.

According to the foregoing solution, the first information may include information such as the priority of the second terminal device or the second terminal device group, or the priority or priorities of the one or more services or the data volume of the second terminal device or the second terminal device group, so that the first terminal device may determine, based on the first information, whether to concede a resource for the second terminal device and/or a proportion of the resource to be conceded.

With reference to the first aspect, in some implementations of the first aspect, that the first terminal device sends second information to the second terminal device includes: When the first terminal device successfully receives the first information and the first terminal device agrees to concede a part of the first resource, the first terminal device sends the second information to the second terminal device. Alternatively, the method further includes: When the first terminal device successfully receives the first information, and the first terminal device does not agree to concede a part of the first resource the first terminal device sends fourth information to the second terminal device. The fourth information indicates that the first terminal device does not agree to concede a part of the first resource. Alternatively, when the first terminal device fails to receive the first information, the first terminal device sends fifth information. The fifth information indicates that the first information is not successfully received.

According to the foregoing solution, after determining whether to concede the resource, the first terminal device may notify the second terminal device, so that both parties reach a consensus.

With reference to the first aspect, in some implementations of the first aspect, the first information is carried on the second resource, and the second information is carried on a fourth resource. An interval between the fourth resource and the second resource is first duration. Alternatively, the first resource is a periodic resource, the fourth resource is a resource in a first period, and the first period is a period after a period of the first resource in which the second resource is located.

With reference to the first aspect according to the invention, in the invention, the second information includes first indication information. The first indication information indicates a third resource. The third resource is a resource that is in the first resource and that is conceded by the first terminal device for the second terminal device. Alternatively, the third resource is a resource the first terminal device stops using in the first resource.

According to the foregoing solution, the first terminal device indicates, by using the second information, the third resource conceded for the second terminal device, so that the second terminal device may determine, based on the second information, that the first terminal device agrees to concede the resource, and may also determine a location of the resource conceded by the first terminal device.

With reference to the first aspect according to the invention, in the invention, the first indication information includes identification information of the third resource. Alternatively, the first indication information includes proportion information and resource location information, the proportion information indicates a proportion of the third resource in the first resource, and the resource location information indicates at least one of the following location information of the third resource in the first resource: a time domain start position, a time domain end position, a frequency domain start position, or a frequency domain end position. Alternatively, the first indication information includes the proportion information, and the resource location information is predefined in the protocol or preconfigured in the network.

With reference to the first aspect, in some not claimed implementations of the first aspect, the method further includes: The first terminal device releases the third resource.

With reference to the first aspect, in some implementations of the first aspect, the method further includes: The first terminal device determines the third resource according to a resource negotiation criterion.

With reference to the first aspect, in some implementations of the first aspect, the resource negotiation criterion includes determining a negotiated resource based on one or more of the following information:

the priority of the first terminal device, the priority of the first terminal device group, a priority or priorities of one or more services of the first terminal device, a priority or priorities of one or more services of the first terminal device group, a data volume of the first terminal device, a data volume of the first terminal device group, the priority of the second terminal device, the priority or priorities of the one or more services of the second terminal device, the priority or priorities of the one or more services of the second terminal device group, the priority of the second terminal device group, the data volume of the second terminal device, or the data volume of the second terminal device group.

The first terminal device group includes the first terminal device. The second terminal device group includes the second terminal device.

A second aspect according to the invention provides a communication method for resource negotiation for sidelink communication. The method is performed by a second terminal device or a module (for example, although not claimed, a chip) configured (or used) in a second terminal device. The following describes how the method is performed by the second terminal device.

The method according to the invention includes: The second terminal device sends first information to a first terminal device. The first information is used to request the first terminal device to concede a part of a first resource of the first terminal device. The second terminal device receives the following information sent by the first terminal device: second information, indicating that the first terminal device agrees to concede a part of the first resource for the second terminal device; and optionally at least one of the following information:

fourth information, indicating that the first terminal device does not agree to concede a part of the first resource; and fifth information, indicating that the first information is not successfully received.

With reference to the second aspect, in some implementations of the second aspect, the first information is carried on a second resource. The second resource is included in the first resource. A location of the second resource in the first resource is predefined in a protocol or preconfigured in a network. Alternatively, the method further includes: The second terminal device receives third information from the first terminal device. The third information indicates the second resource.

With reference to the second aspect, in some not claimed implementations of the second aspect, the method further includes: The second terminal device receives a first message from the first terminal device. The first message includes the third information and/or information that indicates one or more of the following: a time domain position of the first resource, a frequency domain position of the first resource, a period of the first resource, a priority of the first terminal device, a priority of a first terminal device group, or a period of the second resource. The first terminal device group includes the first terminal device.

With reference to the second aspect, in some not claimed implementations of the second aspect, the first message is a broadcast message.

With reference to the second aspect, in some not claimed implementations of the second aspect, the first information includes information indicating one or more of the following:

a priority of the second terminal device, a priority of a second terminal device group, a priority or priorities of one or more services of the second terminal device, a priority or priorities of one or more services of the second terminal device group, a data volume of the second terminal device, or a data volume of the second terminal device group.

The second terminal device group includes the second terminal device.

With reference to the second aspect, in some not claimed implementations of the second aspect, the second information includes first indication information. The first indication information indicates a third resource. The third resource is a resource that is in the first resource and that is conceded by the first terminal device for the second terminal device. Alternatively, the third resource is a resource the first terminal device stops occupying in the first resource.

With reference to the second aspect, in some not claimed implementations of the second aspect, the first information is carried on the second resource, and the second information is carried on a fourth resource.

Although not claimed, an interval between the fourth resource and the second resource is first duration; or the first resource is a periodic resource, the fourth resource is a resource in a first period, and the first period is a period after a period of the first resource in which the second resource is located.

With reference to the second aspect, in some not claimed implementations of the second aspect, the method further includes: The second terminal device or the second terminal device group uses the third resource; and/or the second terminal device indicates the second terminal device group to use the third resource. The second terminal device group includes the second terminal device.

With reference to the second aspect, in some not claimed implementations of the second aspect, the first indication information includes identification information of the third resource. Alternatively, the first indication information includes proportion information and resource location information, the proportion information indicates a proportion of the third resource in the first resource, and the resource location information indicates at least one of the following location information of the third resource in the first resource: a time domain start position, a time domain end position, a frequency domain start position, or a frequency domain end position. Alternatively, the first indication information includes the proportion information, and the resource location information is predefined in the protocol or preconfigured in the network.

With reference to the second aspect, in some not claimed implementations of the second aspect, the method further includes: The second terminal device determines, based on an interference magnitude measured on the first resource, a size of the first resource, and/or a priority of the first resource, to request for a part of the first resource.

With reference to the second aspect, in some not claimed implementations of the second aspect, it is specified in the protocol or preconfigured in the network that after the second terminal device sends the first information, in at least one of the following cases, the second terminal device stops sending request information for requesting a terminal device to concede a resource: within second duration, before the second information is received, or before the fourth information is received.

A third aspect according to the invention provides a communication apparatus. The apparatus is a first terminal device or a module (for example, a not claimed chip) configured (or used) in a first terminal device for carrying out the steps of the first aspect.

The communication apparatus includes, although not specifically claimed: a transceiver unit, configured to receive first information from a second terminal device, where the first information is used to request the first terminal device to concede a part of a first resource of the first terminal device; and a processing unit, configured to determine to concede a part of the first resource for the second terminal device. The transceiver unit is further configured to send second information to the second terminal device. The second information indicates that the first terminal device agrees to concede a part of the first resource for the second terminal device.

With reference to the third aspect, in some not claimed implementations of the third aspect, the first resource is specifically a resource used by the first terminal device or a first terminal device group.

With reference to the third aspect, in some not claimed implementations of the third aspect, the first information is carried on a second resource. The second resource is included in the first resource. A location of the second resource in the first resource is predefined in a protocol or preconfigured in a network. Alternatively, the transceiver unit is further configured to send third information. The third information indicates the second resource.

With reference to the third aspect, in some not claimed implementations of the third aspect, the transceiver unit is further configured to send a first message. The first message includes the third information and/or information that indicates one or more of the following:

a time domain position of the first resource, a frequency domain position of the first resource, a period of the first resource, a priority of the first terminal device, a priority of the first terminal device group, or a period of the second resource.

Although not specifically claimed, the first terminal device group includes the first terminal device.

With reference to the third aspect, in some implementations of the third aspect, the first message is a broadcast message.

With reference to the third aspect, in some not claimed implementations of the third aspect, the first information includes information indicating one or more of the following:

a priority of the second terminal device, a priority of a second terminal device group, a priority or priorities of one or more services of the second terminal device, a priority or priorities of one or more services of the second terminal device group, a data volume of the second terminal device, or a data volume of the second terminal device group.

The second terminal device group includes the second terminal device.

With reference to the third aspect, in some not claimed implementations of the third aspect, the transceiver unit is further configured to:

when the transceiver unit successfully receives the first information and the first terminal device agrees to concede a part of the first resource, send the second information to the second terminal device; when the transceiver unit successfully receives the first information and the first terminal device does not agree to concede a part of the first resource, send fourth information to the second terminal device, where the fourth information indicates that the first terminal device does not agree to concede a part of the first resource; or when the transceiver unit fails to receive the first information, send fifth information, where the fifth information indicates that the first information is not successfully received.

With reference to the third aspect, in some not claimed implementations of the third aspect, the first information is carried on the second resource, and the second information is carried on a fourth resource. An interval between the fourth resource and the second resource is first duration. Alternatively, the first resource is a periodic resource, the fourth resource is a resource in a first period, and the first period is a period after a period of the first resource in which the second resource is located.

With reference to the third aspect, in some not claimed implementations of the third aspect, the second information includes first indication information. The first indication information indicates a third resource. The third resource is a resource that is in the first resource and that is conceded by the first terminal device for the second terminal device. Alternatively, the third resource is a resource the first terminal device stops using in the first resource.

With reference to the third aspect, in some not claimed implementations of the third aspect, the first indication information includes identification information of the third resource. Alternatively, the first indication information includes proportion information and resource location information, the proportion information indicates a proportion of the third resource in the first resource, and the resource location information indicates at least one of the following location information of the third resource in the first resource: a time domain start position, a time domain end position, a frequency domain start position, or a frequency domain end position. Alternatively, the first indication information includes the proportion information, and the resource location information is predefined in the protocol or preconfigured in the network.

With reference to the third aspect, in some not claimed implementations of the third aspect, the processing unit is further configured to release the third resource.

With reference to the third aspect, in some not claimed implementations of the third aspect, the processing unit is further configured for the first terminal device to determine the third resource according to a resource negotiation criterion.

With reference to the third aspect, in some not claimed implementations of the third aspect, the resource negotiation criterion includes determining a negotiated resource based on one or more of the following information: the priority of the first terminal device, the priority of the first terminal device group, a priority or priorities of one or more services of the first terminal device, a priority or priorities of one or more services of the first terminal device group, a data volume of the first terminal device, a data volume of the first terminal device group, the priority of the second terminal device, the priority or priorities of the one or more services of the second terminal device, the priority or priorities of the one or more services of the second terminal device group, the priority of the second terminal device group, the data volume of the second terminal device, or the data volume of the second terminal device group.

Although not specifically claimed, the first terminal device group includes the first terminal device. The second terminal device group includes the second terminal device.

A fourth aspect according to the invention provides another communication apparatus. The apparatus is a second terminal device or a module (for example, a not claimed chip) configured (or used) in a second terminal device for carrying out the steps of the second aspect.

The communication apparatus includes, although not specifically claimed: a processing unit, configured to determine to request a first terminal device to concede a part of a first resource of the first terminal device; and a transceiver unit, configured to send first information to the first terminal device. The first information is used to request the first terminal device to concede a part of the first resource of the first terminal device. The transceiver unit is further configured to receive at least one of the following information sent by the first terminal device:

second information, indicating that the first terminal device agrees to concede a part of the first resource for the second terminal device;
fourth information, indicating that the first terminal device does not agree to concede a part of the first resource; and
fifth information, indicating that the first information is not successfully received.

With reference to the fourth aspect, in some not claimed implementations of the fourth aspect, the first information is carried on a second resource. The second resource is included in the first resource. A location of the second resource in the first resource is predefined in a protocol or preconfigured in a network. Alternatively, the transceiver unit is further configured to receive third information from the first terminal device. The third information indicates the second resource.

With reference to the fourth aspect, in some not claimed implementations of the fourth aspect, the transceiver unit is further configured to receive a first message from the first terminal device. The first message includes the third information and/or information that indicates one or more of the following: a time domain position of the first resource, a frequency domain position of the first resource, a period of the first resource, a priority of the first terminal device, a priority of a first terminal device group, or a period of the second resource.

Although not specifically claimed, the first terminal device group includes the first terminal device.

With reference to the fourth aspect, in some not claimed implementations of the fourth aspect, the first message is a broadcast message.

With reference to the fourth aspect, in some not claimed implementations of the fourth aspect, the first information includes information indicating one or more of the following:

a priority of the second terminal device, a priority of a second terminal device group, a priority or priorities of one or more services of the second terminal device, a priority or priorities of one or more services of the second terminal device group, a data volume of the second terminal device, or a data volume of the second terminal device group.

Although not specifically claimed, the second terminal device group includes the second terminal device.

With reference to the fourth aspect, in some not claimed implementations of the fourth aspect, the second information includes first indication information. The first indication information indicates a third resource. The third resource is a resource that is in the first resource and that is conceded by the first terminal device for the second terminal device. Alternatively, the third resource is a resource the first terminal device stops occupying in the first resource.

With reference to the fourth aspect, in some not claimed implementations of the fourth aspect, the processing unit is further configured to use the third resource. Alternatively, the transceiver unit is further configured to indicate the second terminal device group to use the third resource. The second terminal device group includes the second terminal device.

With reference to the fourth aspect, in some not claimed implementations of the fourth aspect, the first indication information includes identification information of the third resource. Alternatively, the first indication information includes proportion information and resource location information, the proportion information indicates a proportion of the third resource in the first resource, and the resource location information indicates at least one of the following location information of the third resource in the first resource: a time domain start position, a time domain end position, a frequency domain start position, or a frequency domain end position. Alternatively, the first indication information includes the proportion information, and the resource location information is predefined in the protocol or preconfigured in the network.

With reference to the fourth aspect, in some not claimed implementations of the fourth aspect, the processing unit is further configured to determine, based on an interference magnitude measured on the first resource, a size of the first resource, and/or a priority of the first resource, to request for a part of the first resource.

With reference to the fourth aspect, in some not claimed implementations of the fourth aspect, it is specified in the protocol or preconfigured in the network that after the processing unit sends the first information, in at least one of the following cases, the processing unit stops sending request information for requesting a terminal device to concede a resource:

within second duration, before the second information is received, or before the fourth information is received.

A fifth aspect according to the invention provides a communication apparatus, including a processor. The processor may implement the method in the first aspect and any possible implementation of the first aspect. The communication apparatus further includes, although not claimed, a memory. The processor is coupled to the memory, and may be configured to execute instructions in the memory, to implement the method in the first aspect and any possible implementation of the first aspect. Optionally, the communication apparatus further includes a communication interface. The processor is coupled to the communication interface. In this embodiment of this application, the communication interface may be a transceiver, a pin, a circuit, a bus, a module, or another type of communication interface. This is not limited.

In an implementation, the communication apparatus is a first terminal device. When the communication apparatus is the first terminal device, the communication interface may be a transceiver or an input/output interface.

In another not claimed implementation, the communication apparatus is a chip disposed in a first terminal device. When the communication apparatus is the chip disposed in the first terminal device, the communication interface may be an input/output interface.

Optionally, but not claimed, the transceiver may be a transceiver circuit. Optionally, the input/output interface may be an input/output circuit.

A sixth aspect according to the invention provides another communication apparatus, including a processor. The processor may implement the method in the second aspect and any possible implementation of the second aspect. Optionally, but not claimed, the communication apparatus further includes a memory. The processor is coupled to the memory, and may be configured to execute instructions in the memory, to implement the method in the second aspect and any possible implementation of the second aspect. Optionally, the communication apparatus further includes a communication interface. The processor is coupled to the communication interface.

In an implementation, the communication apparatus is a second terminal device. When the communication apparatus is the second terminal device, the communication interface may be a transceiver or an input/output interface.

In another not claimed implementation, the communication apparatus is a chip disposed in a second terminal device. When the communication apparatus is the chip disposed in the second terminal device, the communication interface may be an input/output interface.

Optionally, but not claimed, the transceiver may be a transceiver circuit. Optionally, the input/output interface may be an input/output circuit.

A seventh not claimed aspect provides a processor, including an input circuit, an output circuit, and a processing circuit. The processing circuit is configured to receive a signal through the input circuit, and transmit a signal through the output circuit, so that the processor performs the method in the first aspect or the second aspect and any possible implementation of the first aspect or the second aspect.

In a specific not claimed implementation process, the processor may be one or more chips, the input circuit may be an input pin, the output circuit may be an output pin, and the processing circuit may be a transistor, a gate circuit, a flip-flop, various logic circuits, or the like. The input signal received by the input circuit may be received and input by, for example, but not limited to, a receiver. The signal output by the output circuit may be output to and transmitted by, for example, but not limited to, a transmitter. The input circuit and the output circuit may be a same circuit that serves as the input circuit and the output circuit respectively at different moments. Specific implementations of the processor and the various circuits are not limited in embodiments of this application.

An eighth not claimed aspect provides a computer program product. The computer program product includes a computer program (which may also be referred to as code or instructions). When the computer program is run, a computer is enabled to perform the method in the first aspect or the second aspect and any possible implementation of the first aspect or the second aspect.

A ninth not claimed aspect provides a computer-readable storage medium. The computer-readable storage medium stores a computer program (which may also be referred to as code or instructions). When the computer program runs on a computer, the computer is enabled to perform the method in the first aspect or the second aspect and any possible implementation of the first aspect or the second aspect.

A tenth not claimed aspect provides a communication system, including at least one foregoing first terminal device and at least one foregoing second terminal device.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

## BRIEF DESCRIPTION OF DRAWINGS

FIG. 1 is a schematic diagram of a communication system applicable to an embodiment of this application;
FIG. 2 is another schematic diagram of an architecture of a communication system applicable to an embodiment of this application;
FIG. 3 is a schematic flowchart of selecting a resource by a terminal device in a mode 2 according to an embodiment of this application;
FIG. 4 is a schematic flowchart of a resource negotiation method according to an embodiment of this application;
FIG. 5 is a schematic diagram of a first resource according to an embodiment of this application;
FIG. 6 is a schematic diagram of monitoring a broadcast message by a GH 4 according to an embodiment of this application;
FIG. 7 is a schematic diagram of sending a negotiation request message by a GH 4 according to an embodiment of this application;
FIG. 8 is a schematic flowchart of calculating a proportion of a negotiated resource according to an embodiment of this application;
FIG. 9 is a schematic diagram of sending second information by a GH 4 according to an embodiment of this application;
FIG. 10 is another schematic diagram of sending second information by a GH 4 according to an embodiment of this application;
FIG. 11 is a schematic block diagram of an example of a communication apparatus according to this application;
FIG. 12 is a schematic diagram of a structure of an example of a terminal device according to this application; and
FIG. 13 is a schematic diagram of a structure of an example of a network device according to this application.

## DESCRIPTION OF EMBODIMENTS

The following describes technical solutions of this application with reference to accompanying drawings.
The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or new radio (new radio, NR) system, a vehicle-to-everything (Vehicle-to-X, V2X) system, a long term evolution-vehicle (Long Term Evolution-Vehicle, LTE-V) system, an internet of vehicles system, a machine type communication (machine type communication, MTC) system, an internet of things (Internet of Things, IoT) system, a long term evolution-machine (Long Term Evolution-Machine, LTE-M) system, a machine to machine (Machine to Machine, M2M) system, and a non-terrestrial network (non-terrestrial network, NTN) system. V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like. The NTN system may also be referred to as a satellite communication system, another future evolved communication system, or the like.

A terminal device in embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, transportation equipment such as a vehicle, a ship, or an airplane, an in-vehicle device, a wearable device, a terminal device in a 5G network, a terminal device in a future evolved public land mobile network (public land mobile network, PLMN), or the like. The terminal device is provided with a wireless transceiver antenna to set and obtain a communication status, to complete communication.

It should be understood that a specific form of the terminal device is not limited in this application.

A network device in embodiments of this application may be any device with a wireless transceiver function. The device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, Home evolved NodeB, or Home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), or a transmission and reception point (transmission and reception point, TRP). Alternatively, the device may be a gNB or a transmission point (TRP or TP) in a 5G (for example, NR) system, or one or a group of antenna panels (including a plurality of antenna panels) of a base station in a 5G system, or may be a network node forming a gNB or a transmission point, for example, a baseband unit (BBU) or a distributed unit (distributed unit, DU).

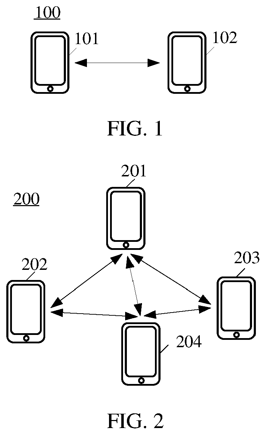

FIG. 1 is a schematic diagram of a communication system 100 applicable to an embodiment of this application.

As shown in FIG. 1, the communication system 100 may include at least two terminal devices, for example, a terminal device 101 and a terminal device 102. The terminal device 101 and the terminal device 102 may negotiate a resource by using a resource negotiation method provided in this application. The communication system may further include a network device. However, this application is not limited thereto.

FIG. 2 is a schematic diagram of a communication system 200 applicable to an embodiment of this application.

As shown in FIG. 2, the communication system 200 may include at least two terminal devices, for example, terminal devices 201, 202, 203, and 204. The terminal devices may communicate with each other by using a sidelink. A plurality of terminal devices may form a terminal device group to improve communication efficiency. A complete process mechanism is needed for communication in a manner of a terminal device group. Key processes and technologies include: establishment of a terminal device group, selection of a head terminal device (group header, GH) in the terminal device group, a terminal device group maintenance (Group Maintain) mechanism, resource allocation between terminal device groups and within the terminal device group, and the like. For example, in FIG. 2, the terminal device 201 may be a group header in a terminal device group including the terminal devices 201, 202, 203, and 204, and the terminal devices 202, 203, and 204 may be group members (group members, GMs) of the terminal device group. In the terminal device group, the GM may monitor only a synchronization signal (synchronization signal, SS) and physical broadcast channel (physical broadcast channel, PBCH) block (SS and PBCH block, SSB) of the GH to keep synchronization, and may not receive synchronization information sent by a device outside the group, thereby maintaining uniqueness and saving energy. When the GH sends a synchronization signal block SSB to the GM in the group, transmit power may be reduced to save energy.

Sidelink communication may be performed by using an unlicensed spectrum. The unlicensed (unlicensed) spectrum is open, and may be used effectively to improve performance and a rate. A communication device may perform communication on an unlicensed frequency band resource obtained through contention in a resource contention manner. An application scenario in which an unlicensed spectrum is used for a sidelink (Sidelink-Unlicensed) may include but is not limited to the following typical scenarios:

- a home scenario: communication is performed between a mobile phone, a television, a personal computer (personal computer, PC), a tablet, a speaker, a wristband, a headset, and the like;

- a conference room scenario: communication is performed between a large screen, a PC, a mobile phone, a tablet, and the like; and
- a team game scenario: communication is performed between game devices when a plurality of players play a team game in teams.

Based on the sidelink-unlicensed application scenario, a mechanism in which a terminal device group is used as a unit of sidelink-unlicensed communication is a main research objective. Using the terminal device group as the unit can achieve the following effects.

(1) A probability of resource collision is reduced: In a heavy traffic load scenario and a scenario with much UE, if all UE autonomously contends for resources, the probability of resource collision is high. If there is a group header to coordinate resource allocation, resource collision events can be greatly reduced.
(2) Resource allocation efficiency is improved: Resources are allocated within groups after being negotiated at a large granularity between the groups.
(3) Sidelink communication performance is improved: The group header may measure channel information and a service load of each member in the group and information between the members, to better control links.
(4) A delay is reduced: Information exchange with a base station is reduced, and an air interface delay is reduced.

Currently, a sidelink resource allocation manner includes two resource allocation modes: a mode 1 (Mode 1) and a mode 2 (Mode 2).

The mode 1 means that a terminal device determines, based on a sidelink scheduling grant (sidelink grant) sent by a network device, a resource used to send sidelink data. The sidelink scheduling grant is used to grant the terminal device a dedicated resource for sending the sidelink data. For example, before sending the sidelink data, the terminal device reports a buffer status report (buffer status report, BSR) to the network device, to notify the network device of a data amount to be sent. The network device grants, based on the data amount reported by the terminal device, the corresponding resource to the terminal device.

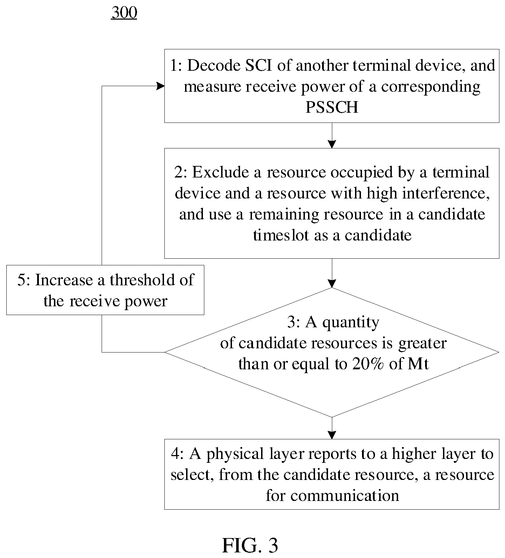

In the mode 2, the terminal device autonomously contends for a transmission resource in a preconfigured resource pool to perform sidelink data transmission. FIG. 3 is a schematic diagram 300 of a resource selection process of the terminal device in the mode 2.

As shown in FIG. 3, the resource selection process in the mode 2 may include the following steps.

1: The terminal device decodes sidelink control information (sidelink control information, SCI) sent by another terminal device, and measures receive power of a physical sidelink shared channel (physical sidelink shared channel, PSSCH) corresponding to the SCI.
2: Exclude a resource occupied by the terminal device and a resource with high interference (for example, receive power (that is, interference power) is greater than a preset threshold) from the resource pool, and use a remaining resource in a candidate slot as a candidate resource.
3: Determine whether a quantity of candidate resources is greater than 20% of Mt. Mt is a total quantity of resources in one candidate slot.
4: If the quantity of candidate resources is greater than or equal to 20% of resources in the resource pool, the terminal device selects, from the candidate resource, a resource for communication (for example, a physical layer of the terminal device may report to a higher layer, and the higher layer performs selection).
5: If the quantity of candidate resources is less than 20% of resources in the resource pool, increase the threshold of the receive power (for example, the threshold is increased by 3 dB), and then perform step 1, until the quantity of candidate resources is greater than or equal to 20% of the resources in the resource pool.

According to the foregoing resource selection process in the mode 2, when the quantity of candidate resources does not reach 20% of the resources in the resource pool, the terminal device adjusts the interference threshold until the candidate resource satisfies the condition. Therefore, the resource finally for sidelink communication may collide with the communication resource of the communication device, with large mutual interference. Consequently, a probability of retransmission is high, and communication reliability is low.

In the sidelink-unlicensed scenario, the terminal device needs to first perform listen before talk (listen before talk, LBT) to contend for a channel resource before communication. An LBT mechanism functions outside a system (for example, Wi-Fi), and resource negotiation may be performed inside the system through message exchange/sensing-selection.

In D2D communication in which no base station participates, there is no central processor between terminal devices for management and control, and a centralized scheduling mode cannot be supported. Currently, only a contention and preemption mechanism is available for resource allocation in a sidelink system, and a negotiation mechanism is unavailable for better resource allocation. This application provides a resource negotiation method. Terminal devices may negotiate a resource with each other through information exchange, to reduce a probability of mutual interference caused by resource collision. Specifically, a terminal device may send negotiation request information to negotiate with another terminal device or request another terminal device to concede some resources. When the another terminal device agrees to concede some resources, the another terminal device releases the conceded resources, and the terminal device may perform sidelink communication on the conceded resources. Resource negotiation is performed between the terminal devices, so that a probability of resource collision can be reduced, and communication reliability can be improved.

The following describes, with reference to the accompanying drawings, a resource negotiation method for sidelink communication provided in this application.

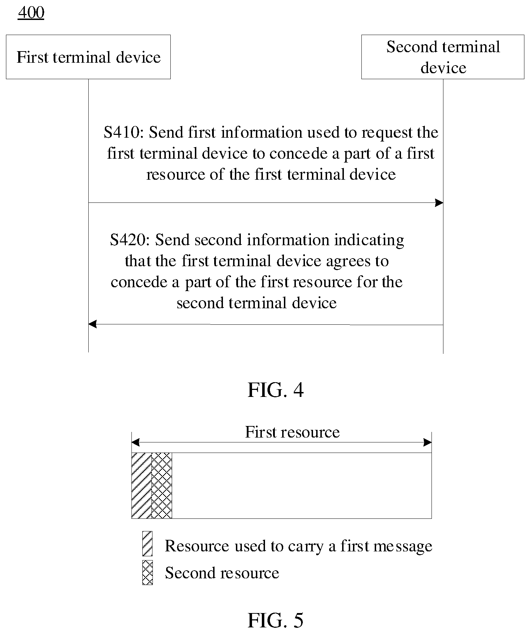

FIG. 4 is a schematic flowchart of a resource negotiation method 400 according to an embodiment of this application.

S410: A second terminal device sends first information to a first terminal device. The first information is used to request the first terminal device to concede a part of a first resource of the first terminal device.

Correspondingly, the first terminal device receives the first information from the second terminal device. The first information may be referred to as negotiation (cooperation) request information.

The first resource is a resource used by the first terminal device. Alternatively, a first terminal device group includes the first terminal device. The first terminal device may be a head terminal device (group header) in the first terminal device group. The first resource is a resource used by the first terminal device group. The resource used by the first terminal device group is managed by the head terminal device (that is, the first terminal device) in the first terminal device group, that is, the first resource is a resource managed by the first terminal device.

As an example instead of a limitation, the first resource may be a resource in an unlicensed frequency band.

The first resource may be allocated by a network device to the first terminal device. Alternatively, the first resource may be obtained by the first terminal device through contention.

For example, the first resource is a resource in an unlicensed frequency band, and the first terminal device obtains the first resource by using a listen before talk (listen before talk, LBT) mechanism. However, this application is not limited thereto.

Before S410, the first terminal device may send a first message. The first message may include resource indication information. The resource indication information may indicate a time domain position of the first resource and/or a frequency domain position of the first resource. Optionally, the first resource is a periodic resource, and indication information indicating the first resource may further indicate a period of the first resource.

As an example instead of a limitation, the first message is SCI.

Optionally, the first message is a broadcast message, and/or the first message is carried on a broadcast channel. The first terminal device may broadcast the first resource of the first terminal device by using the first message.

Before S410, the second terminal device may obtain (or monitor) resource indication information of another terminal device, detect an interference magnitude on a resource of the another terminal device, and determine, based on the interference magnitude and/or a resource size, whether to send the negotiation request information to at least one terminal device, to request the terminal device to concede some resources.

In an implementation, the second terminal device may determine, according to an optimality criterion, to send the negotiation request information to the first terminal device. The optimality criterion may include but is not limited to one or more of the following:

interference on a corresponding resource is minimum, a time domain length of the corresponding resource is maximum, a frequency domain length of the corresponding resource is maximum, a service priority of a device corresponding to the corresponding resource is lowest, or the negotiation request information is sent to as few terminal devices as possible.

For example, the second terminal device obtains the resource indication information of the another terminal device, and detects an interference magnitude on a resource of each terminal device based on the resource indication information. The second terminal device determines that interference on the first resource of the first terminal device is minimum and that a time domain length or a frequency domain length of the first resource in resources at a same interference level (for example, resources below a preset interference threshold or between two interference thresholds are at a same interference level) is maximum. Alternatively, when both interference and a resource length are at a same level, a terminal device with a lowest service priority is determined. The second terminal device sends the first information to the first terminal device. However, this application is not limited thereto.

In another implementation, the second terminal device may determine, based on one or more of a priority of the first terminal device, a priority or priorities of one or more services of the first terminal device, a priority of the first terminal device group, or a priority or priorities of one or more services of the first terminal device group, to send the negotiation request information to the first terminal device.

Optionally, the first message further includes one or more of the following:

the priority of the first terminal device, the priority or priorities of the one or more services of the first terminal device, the priority of the first terminal device group, or the priority or priorities of the one or more services of the first terminal device group.

For example, when the first resource is the resource used by the first terminal device, the first message may include the priority of the first terminal device. The second terminal device may determine, in a plurality of terminal devices, that the priority of the first terminal device is lower than that of the second terminal device. In this case, the second terminal device determines to send the first information to the first terminal device. However, this application is not limited thereto.

For another example, when the first resource is the resource used by the first terminal device, the first message may include the priority or priorities of the one or more services of the first terminal device. The second terminal device may compare obtained priorities of services of a plurality of terminal devices with a priority or priorities of one or more services of the second terminal device, and determine that priorities of all services of the first terminal device are lower than the priorities of the services of the second terminal device. In this case, the second terminal device determines to send the first information to the first terminal device. However, this application is not limited thereto.

For another example, when the first resource is the resource used by the first terminal device group, the first message may include the priority of the first terminal device group and/or the priority or priorities of the one or more services of the first terminal device group. The second terminal device may determine, based on an obtained priority of a terminal device, and/or an obtained priority of a terminal device group, or an obtained priority of a service, to send the first information to the first terminal device. However, this application is not limited thereto.

Optionally, it is specified in a protocol or preconfigured in a network that after the second terminal device sends the first information, within second duration or before receiving feedback information (for example, the feedback information may be the following second information or fourth information) of the first terminal device, the second terminal device stops sending request information for requesting a terminal device to concede a resource (that is, stops sending the negotiation request information).

That is, the second terminal device sends the negotiation request information to only one terminal device within a specific time (for example, within the second duration or before receiving the feedback information), to obtain a resource conceded by the one terminal device for the second terminal device. In this way, resource continuity and non-fragmentation can be ensured, and resource utilization efficiency can be improved. Especially, when the resource is a resource in an unlicensed frequency band, resource utilization can be improved by using the continuous resource.

The second terminal device may send the first information to the first terminal device on a second resource. The second resource is included in the first resource.

The first terminal device may send third information. The third information indicates the second resource. That is, the first terminal device may notify, by using the third information, another terminal device of sending negotiation request information to the first terminal device on the second resource. After determining to send the negotiation request information to the first terminal device, the second terminal device may send the first information to the first terminal device on the second resource based on the third information.

For example, the third information may indicate a time domain position and/or a frequency domain position of the second resource in the first resource. However, this application is not limited thereto.

Optionally, the first message may include the third information. Alternatively, the third information and the first message may be sent at different moments.

For example, the first resource may be shown in FIG. 5. The first terminal device sends the first message on a resource used to carry the first message. The first message may include the resource indication information used to indicate the time domain position and/or the frequency domain position of the first resource. For example, the resource indication information may specifically indicate a time domain start position and duration (or referred to as transmission duration (transmission opportunity, TxOP), for example, 5 ms, 10 ms, 20 ms, or 40 ms) of the first resource, and/or indicate a frequency domain start position and a frequency domain length. When the first resource is a periodic resource, the first message further includes a period of the first resource. The first message further includes the third information. The third information indicates the time domain position and/or the frequency domain position of the second resource. The location of the second resource in the first resource may be shown in FIG. 5. However, this application is not limited thereto. Optionally, when the second resource is a periodic resource, the third information may further include a period of the second resource. The period of the second resource may be the same as or different from that of the first resource. For example, the period of the second resource may be less than that of the first resource, and the second resource may appear in the first resource at least twice. However, this application is not limited thereto. Optionally, the first message may further include one or more of the priority of the first terminal device, the priority or priorities of the one or more services of the first terminal device, the priority of the first terminal device group, or the priority or priorities of the one or more services of the first terminal device group.

Optionally, the first information includes one or more of the following:

a priority of the second terminal device, a priority of a second terminal device group, a priority or priorities of one or more services of the second terminal device, a priority or priorities of one or more services of the second terminal device group, a data volume of the second terminal device, or a data volume of the second terminal device group.

The second terminal device group includes the second terminal device. As an example instead of a limitation, the second terminal device may be a head terminal device in the second terminal device group.

S420: The first terminal device sends second information to the second terminal device. The second information indicates that the first terminal device agrees to concede a part of the first resource for the second terminal device.

If successfully receiving the first information in S410, the first terminal device may determine that the second terminal device requests the first terminal device to concede a part of the first resource. When the first terminal device agrees to concede a part of the first resource, the first terminal device performs S420 to send the second information to the second terminal device. Correspondingly, the second terminal device receives the second information from the first terminal device.

When the first terminal device agrees to concede a part of the first resource, the first terminal device determines a third resource to be conceded for the second terminal device in the first resource.

Optionally, the first terminal device may determine the third resource in the first resource based on one or more of the following:

the priority of the first terminal device, the priority or priorities of the one or more services of the first terminal device, a data volume of the first terminal device, the priority of the first terminal device group, the priority or priorities of the one or more services of the first terminal device group, a data volume of the first terminal device group, the priority of the second terminal device, the priority or priorities of the one or more services of the second terminal device, the data volume of the second terminal device, the priority or priorities of the one or more services of the second terminal device group, the priority of the second terminal device group, or the data volume of the second terminal device group.

For example, the first information sent by the second terminal device may include the priority of the second terminal device. Different priorities may be allocated based on a type of a terminal device. For example, a vehicle may have a highest priority due to a driving safety requirement, a mobile phone may have a second highest priority, and a band, a headset, and the like may have a lowest priority. The first terminal device may determine, based on the priority of the second terminal device, a size of the third resource to be conceded from the first resource, or may determine, based on the priority of the second terminal device a proportion of the third resource to be conceded in the first resource. Alternatively, the first terminal device may compare the priority of the first terminal device with that of the second terminal device, and determine, based on a comparison result, a size of the third resource to be conceded or a proportion of the third resource to be conceded in the first resource. However, this application is not limited thereto. The priority of the terminal device may be allocated in another manner. This is not limited in this application.

For another example, the first information may include the priority or priorities of the one or more services of the second terminal device. For example, it may be specified that a priority of an ultra-reliable and low latency communication (ultra-reliable and low latency communication, URLLC) service is higher than that of an enhanced mobile broadband (enhanced mobile broadband, eMBB) service. Alternatively, a priority of a service may be indicated based on a quality of service (quality of service, QoS) flow identifier (QoS flow identifier, QFI), and different QFIs correspond to different service priorities. After receiving the first information, the first terminal device obtains a priority of a service of the second terminal device, and determines a size of the third resource or a proportion of the third resource in the first resource based on the priority of the service of the second terminal device. Alternatively, the first terminal device compares the priority or priorities of the one or more services of the first terminal device with the priority or priorities of the one or more services of the second terminal device, to determine a size of the third resource or a proportion of the third resource in the first resource. However, this application is not limited thereto.

For another example, the first information may include the data volume of the second terminal device. The first terminal device determines, based on the data volume, a size of the third resource to be conceded or a proportion of the third resource in the first resource. Alternatively, the first terminal device compares the data volumes of the first terminal device and the second terminal device, and determines the third resource based on a comparison result. However, this application is not limited thereto.

The second terminal device may be the head terminal device in the second terminal device group. The first information may include one or more of the priority of the second terminal device group, the priority or priorities of the one or more services, or the data volume. The first terminal device determines, based on the first information, the third resource to be conceded.

After determining the third resource to be conceded, the first terminal device sends the second information to the second terminal device, to notify the second terminal device that the first terminal device agrees to concede a part of the resource for the second terminal device. Optionally, the second information further includes first indication information. The first indication information indicates the third resource.

In an implementation, the first indication information includes identification information of the third resource.

For example, the first message sent by the first terminal device includes the resource indication information indicating the first resource of the first terminal device, and further includes block information of the first resource. For example, the first resource is divided to a plurality of resource blocks, and each resource block corresponds to a piece of identification information. The third resource includes one or more of the plurality of resource blocks. The first indication information specifically indicates, by using identification information of the one or more resource blocks included in the third resource, the third resource conceded by the first terminal device. However, this application is not limited thereto.

In another implementation, the first indication information includes proportion information and resource location information. The proportion information indicates a proportion of the third resource in the first resource. The resource location information indicates at least one of the following location information of the third resource in the first resource: a time domain start position, a time domain end position, a frequency domain start position, or a frequency domain end position.

For example, the first indication information indicates that the third resource accounts for 1/3 of the first resource, and the resource location information in the first indication information indicates that the time domain end position of the third resource in the first resource is an end location of the first resource. In this case, after receiving the second information, the second terminal device may determine, based on the first indication information in the second information, that the third resource is 1/3 of the resource before the end location of the first resource. That is, after receiving the second information, the second terminal device determines, based on the first indication information, that the first terminal device concedes 1/3 of the resource before the end location of the first resource for the second terminal device. However, this application is not limited thereto.

In a specific example, the first terminal device determines a proportion of a negotiated resource according to a resource negotiation decision criterion. The resource negotiation decision criterion is an allocation criterion based on a priority and a data volume weight of a terminal device, and the proportion of the negotiated resource is calculated. The first terminal device calculates the proportion (denoted as Ratio_Res) of the negotiated resource based on the priority (denoted as P1) and the data volume (denoted as D1) of the first terminal device (or the first terminal device group) and the priority (denoted as P2) and the data volume (denoted as D2) of the second terminal device (or the second terminal device group) by using the following formula:

$$\text{Ratio\_Res} = \frac{P2 * D2}{P2 * D2 + P1 * D1}$$

Further, the first terminal device calculates a 2-norm between the proportion of the negotiated resource and a quantized proportion based on Ratio_Res. To be specific, the first terminal device calculates a 2-norm $\text{temp}_i$ between Ratio_Res and each resource proportion $X_i$ in Table 1, where i=1, 2, ..., or 9.

$$\text{temp}_i = \sqrt{\|Ratio\_Res - X_i\|^2}$$

**Table 1**

| Index i | 1 | 2 | 3 | 4 | 5 | 6 | 7 | 8 | 9 |
|---|---|---|---|---|---|---|---|---|---|
| Proportion $X_i$ | 1/2 | 1/4 | 3/4 | 1/8 | 3/8 | 5/8 | 7/8 | 1/10 | 9/10 |

The first terminal device determines a minimum 2-norm value in nine 2-norm values obtained through calculation. A proportion corresponding to the minimum 2-norm value is a quantized proportion of the negotiated resource. The first terminal device may determine a proportion $X_i$ in Table 1 corresponding to a minimum value in $\text{temp}_i$ (i=1, 2, ..., or 9) obtained through calculation, that is, the quantized proportion of the negotiated resource. For example, in the nine 2-norm values obtained by the first terminal device through calculation, $X_7$ corresponding to i=7, that is, 7/8, is the quantized proportion of the negotiated resource. However, this application is not limited thereto.

In another implementation, the first indication information includes proportion information. Resource location information of the third resource may be specified in the protocol or preconfigured in the network. The resource location information indicates at least one of the following location information of the third resource in the first resource: a time domain start position, a time domain end position, a frequency domain start position, or a frequency domain end position.

For example, a start location of the resource conceded by the first terminal device is specified in the protocol or preconfigured in the network. For example, it is specified that the start location is an $N^{th}$ symbol in the first resource. The first indication information in the second information sent by the first terminal device indicates the proportion information of the third resource. After receiving the first indication information, the second terminal device may determine a location and a size of the third resource based on the specified start location and the proportion information of the third resource indicated by the first indication information. However, this application is not limited thereto.

In another implementation, the first indication information indicates a time domain start position and duration of the third resource, indicates duration and a time domain end position of the third resource, or indicates a time domain start position and a time domain end position of the third resource.

In addition to indicating a time domain position of the third resource, the first terminal device may further indicate a frequency domain position of the third resource. An indication manner may be similar to that of the time domain position, for example, include one or more of proportion information, a frequency domain start position, a frequency domain end position, or a frequency domain length. Therefore, the second terminal device may determine the third resource after receiving the second information. Alternatively, a frequency domain size of the third resource may be the same as that of the first resource by default. This is not limited in this application.

Optionally, the second information is carried on a fourth resource, and an interval between the fourth resource and the second resource (that is, the resource carrying the first information) is first duration.

As an example instead of a limitation, the first duration may be predefined in the protocol or preconfigured in the network, or the first message includes indication information indicating the first duration.

After determining the third resource, the first terminal device determines the fourth resource based on the first duration, and sends the second information on the fourth resource. After sending the first information on the second resource, the second terminal device determines the fourth resource based on the first duration, and detects the feedback information of the first terminal device on the fourth resource.

Optionally, the first resource is a periodic resource. The first terminal device may feed back the second information after Y ms after the second resource in a period of the first resource in which the second resource is located. Y needs to satisfy a resource conceding proportion and a signal detection processing delay of the second terminal device.

For example, Y needs to be less than or equal to $(1-X)*P-Z$, where X is the resource conceding proportion, P (period, P) is the period of the first resource of the first terminal device, and Z is the signal detection processing delay of the second terminal device. However, this application is not limited thereto.

Optionally, the first resource is a periodic resource, the fourth resource is a resource in a first period, and the first period is a period after the period of the first resource in which the second resource is located.

For example, it may be specified or configured that the first terminal device sends the feedback information, that is, the second information, in a next period of the period of the first resource in which the second resource is located. For example, the first terminal device receives the first information on the second resource in a period N of the first resource. After determining the feedback information, the first terminal device sends the feedback information (that is, the second information) in a next period of the period N, that is, a period N+1 (that is, an example of the first period). Correspondingly, after sending the first information in the period N of the first resource, the second terminal device detects the feedback information on the fourth resource in the period N+1. However, this application is not limited thereto.

After sending the second information, the first terminal device releases the third resource conceded for the second terminal device. In other words, the first terminal device or the first terminal device group stops using the third resource. After the second terminal device receives the second information, the second terminal device determines that the first terminal device concedes the third resource for the second terminal device, and the second terminal device or the second terminal device group uses the third resource.

According to the foregoing solution, a terminal device may send negotiation request information to negotiate with another terminal device or request another terminal device to concede some resources. When the another terminal device agrees to concede some resources, the another terminal device releases the conceded resources, and the terminal device may perform sidelink communication on the conceded resources. Resource negotiation is performed between the terminal devices, so that a probability of resource collision can be reduced, and communication reliability can be improved.

In an optional implementation of this embodiment of this application, when the first terminal device successfully receives the first information and the first terminal device does not agree to concede a part of the first resource, the terminal device sends fourth information. The fourth information indicates that the first terminal device does not agree to concede a part of the first resource.

For example, after receiving the first information, the first terminal device may determine, based on one or more of the following information included in the first information, not to agree to concede the resource for the second terminal device:

the priority of the first terminal device, the priority or priorities of the one or more services of the first terminal device, a data volume of the first terminal device, the priority of the first terminal device group, the priority or priorities of the one or more services of the first terminal device group, a data volume of the first terminal device group, the priority of the second terminal device, the priority or priorities of the one or more services of the second terminal device, the data volume of the second terminal device, the priority or priorities of the one or more services of the second terminal device group, the priority of the second terminal device group, or the data volume of the second terminal device group.

For example, the first information includes the priority of the second terminal device. After receiving the first information, the first terminal device obtains the priority of the second terminal device. The first terminal device compares the priority of the first terminal device with that of the second terminal device. If the priority of the first terminal device is lower than or equal to that of the second terminal device, the first terminal device may agree to concede some resources for the second terminal device, and the first terminal device may send the second information on the fourth resource. Alternatively, if the priority of the first terminal device is higher than that of the second terminal device, the first terminal device may determine not to agree to concede a resource for the second terminal device. The first terminal device may send the fourth information on the fourth resource, to notify the second terminal device that the first terminal device does not agree to concede a part of the first resource. After receiving the fourth information on the fourth resource, the second terminal device may determine that negotiation fails to request the first terminal device to concede the resource. Optionally, the second terminal device may send the negotiation request information to another terminal device, to request the another terminal device to concede some resources. However, this application is not limited thereto.

For another example, the first information includes the data volume of the second terminal device group. After receiving the first information, the first terminal device may compare the data volume of the second terminal device group with that of the first terminal device (or the first terminal device group). For example, if the data volume of the second terminal device group is greater than that of the first terminal device group, and a difference between the data volumes is greater than a preset threshold, the first terminal device agrees to concede some resources, and sends the second information. If the data volume of the second terminal device group is greater than that of the first terminal device group, and a difference between the data volumes is less than or equal to a preset threshold, or the data volume of the second terminal device group is less than or equal to that of the first terminal device group, and a difference between the data volumes is less than or equal to a preset threshold, the first terminal device may not agree to concede some resources, and send the fourth information to notify the second terminal device. However, this application is not limited thereto.

According to the foregoing solution, the second terminal device may send the negotiation request information to negotiate with the first terminal device or request the first terminal device to concede some resources. When not agreeing to concede some resources, the first terminal device may send the fourth information to notify the second terminal device, so that the second terminal device may negotiate with another terminal device or request for some resources. This can reduce a probability of resource collision and improve communication reliability.

In another optional implementation of this embodiment of this application, when the first terminal device fails to receive the first information, the first terminal device sends fifth information. The fifth information indicates that the first information is not successfully received.

For example, when the first terminal device detects the first information on the second resource, but fails to decode the first information, and cannot read content of the first information, the first terminal device may send the fifth information on the fourth resource, so that after receiving the fifth information, the second terminal device may determine that the first terminal device fails to receive the first information. The second terminal device may send the first information to the first terminal device again. However, this application is not limited thereto.

According to the foregoing solution, the second terminal device may send the negotiation request information to negotiate with the first terminal device or request the first terminal device to concede some resources. When failing to receive the negotiation request information, the first terminal device may send the fifth information to notify the second terminal device, so that the second terminal device sends the first information again. This can improve communication reliability.

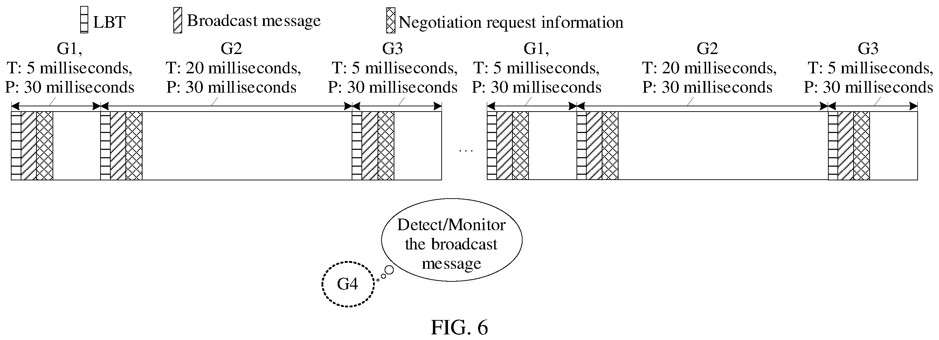

FIG. 6 is a schematic diagram of a resource negotiation method according to an embodiment of this application. FIG. 6 shows an example of a channel in an unlicensed frequency band. For example, the channel in the unlicensed frequency band includes three terminal device groups, that is, a terminal device group 1 (denoted as G1), a terminal device group 2 (denoted as G2), and a terminal device group 3 (denoted as G3), which separately use different periodic resources. For example, a time domain length (denoted as T in FIG. 6) and a period (denoted as P in FIG. 6) of a resource used by G1 are 5 ms and 30 ms, a time domain length and a period of a resource used by G2 are 20 ms and 30 ms, and a time domain length and a period of a resource used by G3 are 5 ms and 30 ms. G1, G2, and G3 each include at least one terminal device.

It should be noted that the resources separately used by G1, G2, and G3 in FIG. 6 may be allocated by a network device, or may be obtained by head terminal devices (group headers, GHs) in the groups through contention. For example, after performing LBT and determining that the channel is in an idle state, the head terminal device determines the time domain length and the period of the resource used by the terminal device group. Alternatively, the resources separately used by G1, G2, and G3 may be obtained by head terminal devices in the groups through negotiation by using the resource negotiation method provided in this application. This is not limited in this application.

As shown in FIG. 6, after performing LBT in each period of each group, the GH in each of G1, G2, and G3 sends a broadcast message of the group. The broadcast message includes one or more of the following:
information about a time-frequency resource (including a time domain resource and a frequency domain resource) used by the group, a period of the used time-frequency resource, a priority of the group, location information of a second resource (that is, a resource used to carry negotiation request information), or a period of the second resource.

Optionally, the broadcast message may not include the location information of the second resource, and a location of the second resource in the resource used by each group of terminal devices may be specified in a protocol or preconfigured in a network.

For example, it may be specified in the protocol or preconfigured in the network that the second resource is after a resource carrying the broadcast message. For example, a next moment of an end moment of the resource carrying the broadcast message is a start moment of the second resource. Duration of the second resource may be further specified. However, this application is not limited thereto.

When the terminal device group 4 (denoted as G4) needs a resource for sidelink communication, a GH 4 (that is, an example of the second terminal device) in G4 may monitor a broadcast message in the channel, to obtain channel occupancy information of another terminal device group. For example, after the GH 4 detects broadcast messages of G1, G2, and G3, and obtains channel occupancy information of G1, G2, and G3, the GH 4 may select, according to an optimality criterion, a terminal device group to which negotiation request information is to be sent.

Optionally, the GH 4 may perform idle channel detection when performing LBT. If detecting that the channel is idle, the GH 4 occupies the idle channel, and sends a broadcast message to notify a surrounding terminal device group or terminal device of corresponding configuration information of a resource occupied by G4. If not detecting that the channel is idle, the GH 4 monitors the broadcast message in the channel, and negotiates, by sending the negotiation request information, with the another terminal device group to concede some resources.

The optimality criterion may include that interference is minimum and that a time domain length or a frequency domain length of the resource used by the terminal device group in resources at a same interference level (for example, resources below a preset interference threshold or between two interference thresholds are at a same interference level) is maximum. For example, it may be specified that one GH sends negotiation request information to only one GH at a time, to ensure continuity and non-fragmentation of resources. It should be understood that in this example, that one GH sends negotiation request information to only one GH at a time is used as an example for description. However, this application is not limited thereto, and that one GH sends negotiation request information to a plurality of GHs at a time should also fall within the protection scope of this application.

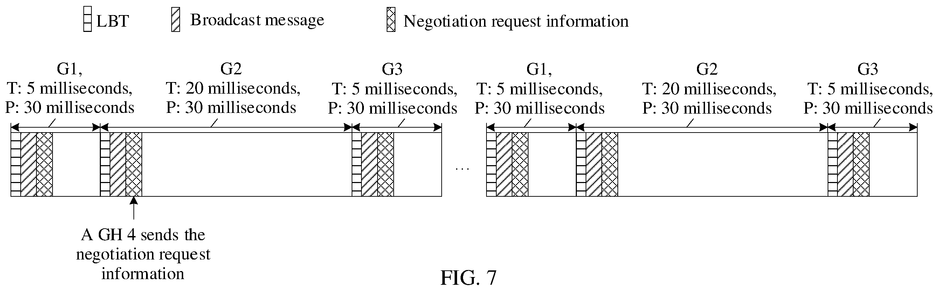

The GH 4 may determine, according to the optimality criterion, to send the negotiation request information to G2, to negotiate to concede some resources for G4. The GH 4 may determine, based on a broadcast message sent by a head terminal device (denoted as GH 2) in G2, a second resource used by G2 to carry negotiation request information. Alternatively, when the location of the second resource is specified in the protocol or preconfigured in the network, the terminal device determines the location of the second resource according to a protocol specification or a network configuration. The GH 4 sends the negotiation request information on the second resource of G2, as shown in FIG. 7.

In an example of this embodiment of this application, the negotiation request information may include a priority (denoted as P4) of G4 and a data volume weight (denoted as D4) of G4.

Correspondingly, the GH 2 detects the negotiation request information on the second resource of G2. If the GH 2 successfully receives the negotiation request information from the GH 4, the GH 2 determines whether to agree to concede some resources.

In an optional implementation, to ensure fairness, it may be specified that a GH that has succeeded in contending for the channel needs to agree to concede some resources if the GH successfully receives negotiation request information from another terminal device. A condition of this implementation may include one or more of the following, but this application is not limited thereto.

1: The terminal device can send negotiation request information only when a used resource does not meet a data volume requirement or no resource is obtained through contention. In other words, the terminal device needs to send a negotiation request honestly.
2: The terminal device obtains a channel resource based on contention, and supports a resource negotiation manner.
3: A time-frequency resource used by the terminal device group that has succeeded in contending for the channel resource is a periodic resource.
4: Resource contention is performed between terminal device groups on a sidelink-unlicensed.

In another optional implementation, the GH 2 may determine, based on the priority of G4 and/or the data volume weight of G4 included in the negotiation request information, whether to agree to concede the resource. For this implementation, refer to the descriptions in the embodiment shown in FIG. 4. For brevity, details are not described herein again.

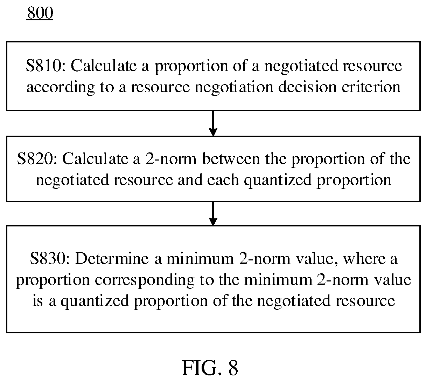

If the GH 2 agrees to concede some resources, the GH 2 may determine a third resource to be conceded. As shown in FIG. 8, a process in which the GH 2 determines the third resource may include but is not limited to the following steps.

S810: The GH 2 calculates a proportion of a negotiated resource according to a resource negotiation decision criterion.

For example, the resource negotiation decision criterion is an allocation criterion based on a priority and a data volume weight of a terminal device group, and the proportion of the negotiated resource is calculated. The GH 2 calculates the proportion (denoted as Ratio_Res) of the negotiated resource based on the priority (denoted as P4) and the data volume (denoted as D4) of G4 and a priority (denoted as P2) and a data volume of G2 by using the following formula:

$$\text{Ratio\_Res} = \frac{P4 * D4}{P2 * D2 + P4 * D4}$$

S820: The GH 2 calculates a 2-norm between the proportion of the negotiated resource and a quantized proportion.

The GH 2 calculates a 2-norm $\text{temp}_i$ between Ratio_Res and each resource proportion $X_i$ in Table 1, where i=1, 2, ..., or 9.

$$\text{temp}_i = \sqrt{\|Ratio\_Res - X_i\|^2}$$

S830: The GH 2 determines a minimum 2-norm value. A proportion corresponding to the minimum 2-norm value is a quantized proportion of the negotiated resource.

The GH 2 determines a proportion $X_i$ in Table 1 corresponding to a minimum value in $\text{temp}_i$ (i=1, 2, ..., or 9) obtained through calculation in S820 as the quantized proportion of the negotiated resource. For example, in the nine 2-norm values obtained through calculation in S820, $X_8$ corresponding to i=8, that is, 1/10, is the quantized proportion of the negotiated resource.

It should be understood that the process shown in FIG. 8 is merely an example. In an optional implementation, if G4 or G2 includes a plurality of services, in step S810, Ratio_Res may be calculated based on a priority of each of the plurality of services and a data volume of each service. For example, G4 includes K services, a priority and a data volume of a k$^{th}$ service are denoted as $P_4^k$ and $D_4^k$, G2 includes L services, and a priority and a data volume of an 1$^{th}$ service are denoted as $P_2^l$ and $D_2^l$. Ratio_Res may be calculated by using the following formula:

$$\text{Ratio\_Res} = \frac{\sum_{k=1}^{K} P_4^k * D_4^k}{\sum_{l=1}^{L} P_2^l * D_2^l + \sum_{k=1}^{K} P_4^k * D_4^k}$$

In another optional implementation, the negotiation request information of G4 may include a product value of the priority and the data volume of G4. The GH 2 may determine Ratio_Res based on the product value in the negotiation request information. However, this application is not limited thereto.

After the GH 2 determines the proportion of the negotiated resource (that is, a third resource) in the resource used by G2, the GH 2 may send second information to the GH 4. The second information indicates that the GH 2 agrees to concede some resources. The second information includes an index i corresponding to the quantized proportion of the third resource, and start location information or end location information of the third resource.

For example, the GH 2 determines that the proportion of the third resource in the resource used by G2 is 1/10, that is, a resource proportion corresponding to the index i=8 in Table 1, and the second information includes the index 8. The second information may further include the start location information of the third resource. For example, the start location information indicates that a start location of the third resource is a start location of the resource used by G2 in each period. Alternatively, the second information may further include the end location information of the third resource. For example, the end location information indicates that an end location of the third resource is an end location of the resource used by G2 in each period. After receiving the second information, the GH 4 may determine the location of the third resource based on the second information and Table 1. However, this application is not limited thereto.

For another example, the second information sent by the GH 2 includes the index 8 of the resource proportion, and a start location or an end location of the third resource is specified in the protocol or preconfigured in the network. For example, the end location of the third resource is an end location of the resource used by G2 in each period by default, and after receiving the second information, the GH 4 may determine that the third resource is 1/10 of the resource used by G2 before an end location of the resource in each period. However, this application is not limited thereto.

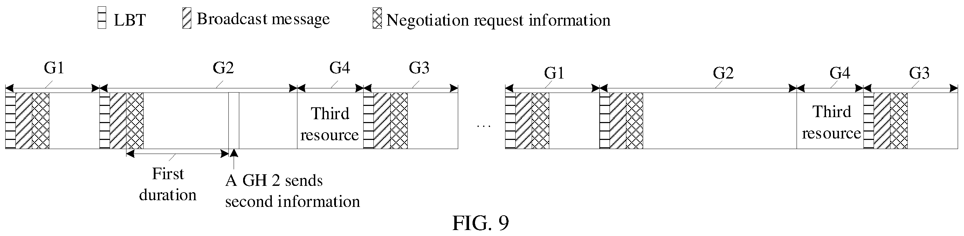

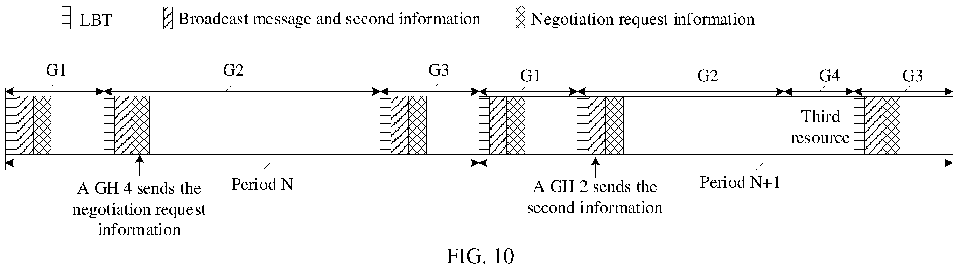

A fourth resource used to carry the second information sent by the GH 2 may be shown in FIG. 9. An interval between the fourth resource and the second resource that carries the negotiation request information is first duration. Alternatively, the GH 2 may feed back the second information in a period after a period in which the negotiation request information is received. For example, as shown in FIG. 10, the GH 2 may feed back the second information in a next period (that is, a period N+1) of the period (a period N shown in FIG. 10) in which the negotiation request information is received. Optionally, the GH 2 may send the second information on a resource used to carry a broadcast message in the period N+1. The second information may be included in the broadcast message, or may not be included in the broadcast message. This is not limited in this application.

The GH 2 releases the third resource after sending the second information. In other words, the GH 2 stops using the third resource after sending the second information. Correspondingly, after receiving the second information, the GH 4 uses the third resource to perform sidelink communication.

In a possible implementation provided in this embodiment of this application, if the GH 2 fails to receive the negotiation request information on the second resource on which the GH 4 sends the negotiation request information, for example, the GH 2 fails to decode the negotiation request information and read content in the negotiation request information, the GH 2 may send fifth information on the fourth resource. The fifth information indicates that the negotiation request information is not successfully received. Therefore, after receiving the fifth information, the GH 4 may determine that the GH 2 fails to receive the negotiation request information. The GH 4 may send the negotiation request information to the GH 2 again. Alternatively, the GH 4 may determine that a channel condition is poor, and send the negotiation request information to another terminal device. However, this application is not limited thereto.

Optionally, after G4 releases the third resource conceded by G2 for G4, it may be specified that G2 may preferentially occupy the third resource. In other words, G2 may reclaim the conceded third resource.

For example, before G4 releases the third resource, the GH 4 may send a notification message to the GH 2, to notify the GH 2 that G4 is to release the third resource. If G2 needs to occupy the third resource, the GH 2 may occupy the third resource when the GH 4 releases the third resource. For example, the notification message may include time information of releasing the third resource by G4. In this way, G2 may reclaim, in priority over another terminal device group, the third resource conceded for G4. If G2 does not need to occupy the third resource, G2 may not occupy the third resource released by the GH 4, and another terminal device group may detect, through LBT, that the third resource is in an idle state, thereby occupying all or some of the third resource. However, this application is not limited thereto.

Optionally, if two terminal device groups occupy two parts of resources that are adjacent in time, it may be specified that when the terminal device group occupying a later resource releases the occupied resource, the terminal device group occupying an earlier resource may preferentially occupy the resource.

For example, in the foregoing example, if G1, G2, G3, and G4 separately occupy some channel resources as shown in the period N+1 in FIG. 10, after G3 releases an occupied resource, G4 may preferentially occupy the resource. However, this application is not limited thereto.

According to the solution of this application, resource negotiation is performed between terminal devices, so that a probability of resource collision can be reduced, and communication reliability can be improved.

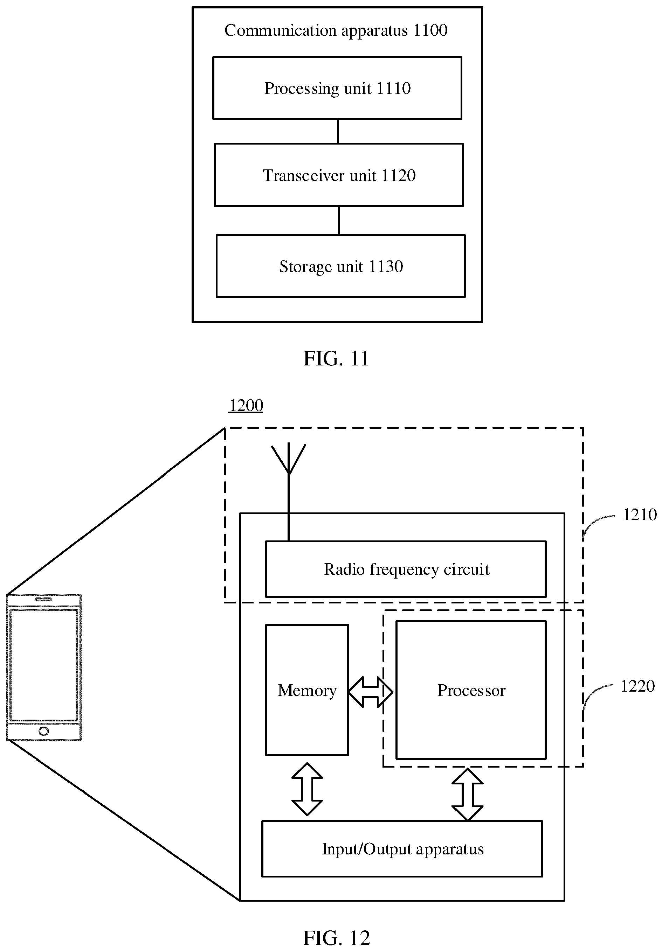

The method provided in embodiments of this application is described above in detail with reference to FIG. 4 to FIG. 10. An apparatus and a device provided in embodiments of this application are described below in detail with reference to FIG. 11 to FIG. 13. To implement functions in the methods provided in the foregoing embodiments of this application, each network element may include a hardware structure and/or a software module, and implement the foregoing functions in a form of the hardware structure, the software module, or a combination of the hardware structure and the software module. Whether a specific function in the foregoing functions is performed by using the hardware structure, the software module, or the combination of the hardware structure and the software module depends on a specific application and a design constraint of the technical solutions.

FIG. 11 is a schematic block diagram of a communication apparatus according to an embodiment of this application. As shown in FIG. 11, the communication apparatus 1100 may include a transceiver unit 1120.

In a possible design, the communication apparatus 1100 may correspond to a terminal device (for example, the first terminal device or the second terminal device) in the foregoing method embodiments, a chip disposed (or used) in a terminal device, or another apparatus, module, circuit, unit, or the like capable of implementing the methods performed by the first terminal device or the second terminal device.

It should be understood that the communication apparatus 1100 may correspond to the first terminal device or the second terminal device in the methods according to embodiments of this application. The communication apparatus 1100 may include units configured to perform the methods performed by the first terminal device or the second terminal device in FIG. 4 to FIG. 10. In addition, the units in the communication apparatus 1100 and the foregoing other operations and/or functions are separately for implementing corresponding procedures of the methods in FIG. 4 to FIG. 10.

Optionally, the communication apparatus 1100 may further include a processing unit 1110. The processing unit 1110 may be configured to process instructions or data, to implement corresponding operations.

It should be further understood that when the communication apparatus 1100 is the chip configured (or used) in the first terminal device or the second terminal device, the transceiver unit 1120 in the communication apparatus 1100 may be an input/output interface or a circuit of the chip, and the processing unit 1110 in the communication apparatus 1100 may be a processor in the chip.

Optionally, the communication apparatus 1100 may further include a storage unit 1130. The storage unit 1130 may be configured to store the instructions or the data. The processing unit 1110 may execute the instructions or the data stored in the storage unit, to enable the communication apparatus to implement the corresponding operations.

It should be understood that the transceiver unit 1120 in the communication apparatus 1100 may be implemented by using a communication interface (for example, a transceiver or an input/output interface), for example, may correspond to a transceiver 1210 in a terminal device 1200 shown in FIG. 12. The processing unit 1110 in the communication apparatus 1100 may be implemented by using at least one processor, for example, may correspond to a processor 1220 in the terminal device 1200 shown in FIG. 12. The processing unit 1110 in the communication apparatus 1100 may alternatively be implemented by using at least one logic circuit. The storage unit 1130 in the communication apparatus 1100 may correspond to a memory in the terminal device 1200 shown in FIG. 12.

It should be understood that a specific process in which the units perform the foregoing corresponding steps is described in detail in the foregoing method embodiments. For brevity, details are not described herein again.

In another possible design, the communication apparatus 1100 may correspond to a network device in the foregoing method embodiments, a chip configured (or used) in a network device, or another apparatus, module, circuit, unit, or the like capable of implementing a method performed by a network device.

It should be understood that the communication apparatus 1100 may correspond to the network device in the methods according to embodiments of this application. The communication apparatus 1100 may include units configured to perform the method performed by the network device in the methods shown in FIG. 4 to FIG. 10. In addition, the units in the communication apparatus 1100 and the foregoing other operations and/or functions are separately for implementing corresponding procedures of the methods in FIG. 4 to FIG. 10.

Optionally, the communication apparatus 1100 may further include a processing unit 1110. The processing unit 1110 may be configured to process instructions or data, to implement corresponding operations.

It should be further understood that when the communication apparatus 1100 is the chip configured (or used) in the network device, the transceiver unit 1120 in the communication apparatus 1100 may be an input/output interface or a circuit of the chip, and the processing unit 1110 in the communication apparatus 1100 may be a processor in the chip.

Optionally, the communication apparatus 1100 may further include a storage unit 1130. The storage unit 1130 may be configured to store the instructions or the data. The processing unit 1110 may execute the instructions or the data stored in the storage unit, to enable the communication apparatus to implement the corresponding operations.

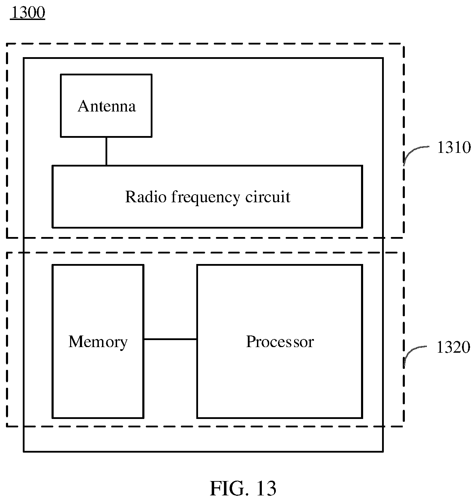

It should be understood that when the communication apparatus 1100 is the network device, the transceiver unit 1120 in the communication apparatus 1100 may be implemented by using a communication interface (for example, a transceiver or an input/output interface), for example, may correspond to a transceiver 1310 in a network device 1300 shown in FIG. 13. The processing unit 1110 in the communication apparatus 1100 may be implemented by using at least one processor, for example, may correspond to a processor 1320 in the network device 1300 shown in FIG. 13. The processing unit 1110 in the communication apparatus 1100 may be implemented by using at least one logic circuit.

It should be understood that a specific process in which the units perform the foregoing corresponding steps is described in detail in the foregoing method embodiments. For brevity, details are not described herein again.

FIG. 12 is a schematic diagram of a structure of a terminal device 1200 according to an embodiment of this application. The terminal device 1200 may be used in the system shown in FIG. 1 or FIG. 2, to perform functions of the terminal device in the foregoing method embodiments. As shown in the figure, the terminal device 1200 includes a processor 1220 and a transceiver 1210. Optionally, the terminal device 1200 further includes a memory. The processor 1220, the transceiver 1210, and the memory may communicate with each other through an internal connection path to transfer a control signal and/or a data signal. The memory is configured to store a computer program. The processor 1220 is configured to execute the computer program in the memory, to control the transceiver 1210 to transmit and receive a signal.

The processor 1220 and the memory may be integrated into a processing apparatus. The processor 1220 is configured to execute program code stored in the memory to implement the foregoing function. During specific implementation, the memory may alternatively be integrated into the processor 1220, or may be independent of the processor 1220. The processor 1220 may correspond to the processing unit in FIG. 11.

The transceiver 1210 may correspond to the transceiver unit in FIG. 11. The transceiver 1210 may include a receiver (or referred to as a receiver machine or a receiver circuit) and a transmitter (or referred to as a transmitter machine or a transmitter circuit). The receiver is configured to receive a signal. The transmitter is configured to transmit a signal.

It should be understood that the terminal device 1200 shown in FIG. 12 can implement processes related to the terminal device in the method embodiments in FIG. 4 to FIG. 10. The operations and/or the functions of the modules in the terminal device 1200 are intended to separately implement corresponding procedures in the foregoing method embodiments. For details, refer to the descriptions in the foregoing method embodiments. To avoid repetition, descriptions are appropriately omitted herein.

The processor 1220 may be configured to perform an action implemented inside the terminal device in the foregoing method embodiments. The transceiver 1210 may be configured to perform an action of the terminal device for sending to the network device or receiving from the network device in the foregoing method embodiments. For details, refer to the description in the foregoing method embodiments. Details are not described herein again.

Optionally, the terminal device 1200 may further include a power supply, configured to supply power to various components or circuits in the terminal device.

In addition, to make functions of the terminal device more perfect, the terminal device 1200 may further include an input/output apparatus, for example, include one or more of an input unit, a display unit, an audio circuit, a camera, and a sensor. The audio circuit may further include a speaker, a microphone, and the like.

FIG. 13 is a schematic diagram of a structure of a network device according to an embodiment of this application. The network device 1300 may perform functions of the network device in the foregoing method embodiments.

It should be understood that the network device 1300 shown in FIG. 13 can implement processes related to the network device in the method embodiments in FIG. 4 to FIG. 10. The operations and/or the functions of the modules in the network device 1300 are intended to separately implement corresponding procedures in the foregoing method embodiments. For details, refer to the descriptions in the foregoing method embodiments. To avoid repetition, descriptions are appropriately omitted herein.

It should be understood that the network device 1300 shown in FIG. 13 may be an eNB or a gNB. Optionally, the network device includes a network device such as a CU, a DU, or an AAU. Optionally, the CU may be specifically classified into a CU-CP and a CU-UP. A specific architecture of the network device is not limited in this application.

It should be understood that the network device 1300 shown in FIG. 13 may be a CU node or a CU-CP node.

An embodiment of this application further provides a processing apparatus, including a processor and a (communication) interface. The processor is configured to perform the method according to any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

According to the method provided in embodiments of this application, this application further provides a computer program product. The computer program product includes computer program code. When the computer program code is executed by one or more processors, an apparatus including the processor is enabled to perform the methods in the embodiments shown in FIG. 4 to FIG. 10.

All or a part of the technical solutions provided in embodiments of this application may be implemented by using software, hardware, firmware, or any combination thereof. When software is used to implement the technical solutions, the technical solutions may be implemented all or partially in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, a network device, a terminal device, a core network device, machine learning device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the method provided in embodiments of this application, this application further provides a computer-readable storage medium. The computer-readable storage medium stores program code. When the program code is executed by one or more processors, an apparatus including the processor is enabled to perform the methods in the embodiments shown in FIG. 4 to FIG. 10.

According to the method provided in embodiments of this application, this application further provides a system, including one or more foregoing network devices. The system may further include one or more foregoing terminal devices.

In the several embodiments provided in this application, it should be understood that the disclosed system, apparatus, and method may be implemented in other manners. For example, the described apparatus embodiment is merely an example. For example, division of the units is merely logical function division, and may be other division during actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, and may be located at one location or distributed on a plurality of network elements. Some or all of the units may be selected based on an actual requirement to achieve the objective of the solution of this embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method (400), comprising:

   receiving (S410), by a first terminal device (101, 201), first information from a second terminal device (102, 202, 203, 204), wherein the first information is used to request the first terminal device (101, 201) to concede a part of a first resource of the first terminal device (101, 201); and
   sending (S410), by the first terminal device (101, 201), second information to the second terminal device (102, 202, 203, 204), wherein the second information indicates that the first terminal device (101, 201) agrees to concede a part of the first resource for the second terminal device (102, 202, 203, 204); and
   wherein the second information comprises first indication information, the first indication information indicates a third resource, and the third resource is a resource that is in the first resource and that is conceded by the first terminal device (101, 201) for the second terminal device (102, 202, 203, 204), or the third resource is a resource the first terminal device (101, 201) stops using in the first resource; and
   wherein the first indication information comprises identification information of the third resource;
   the first indication information comprises proportion information and resource location information, the proportion information indicates a proportion of the third resource in the first resource, and the resource location information indicates at least one of the following location information of the third resource in the first resource: a time domain start position, a time domain end position, a frequency domain start position, or a frequency domain end position; or
   wherein the first indication information comprises the proportion information, and the resource location information is predefined in the protocol or preconfigured in the network.

2. The method (400) according to claim 1, wherein the first resource is specifically a resource used by the first terminal device (101, 201) or a first terminal device group, and the first terminal device group comprises the first terminal device (101, 201).

3. The method (400) according to claim 1 or 2, wherein the first information is carried on a second resource, and the second resource is comprised in the first resource; and
   a location of the second resource in the first resource is predefined in a protocol or preconfigured in a network; or the method (400) further comprises:
   sending, by the first terminal device (101, 201), third information, wherein the third information indicates the second resource.

4. The method (400) according to claim 3, wherein the method (400) further comprises:
   sending (S410), by the first terminal device (101, 201), a first message, wherein the first message comprises at least one of the third information or information that indicates one or more of the following:

   a time domain position of the first resource, a frequency domain position of the first resource, a period of the first resource, a priority of the first terminal device (101, 201), a priority of the first terminal device group, or a period of the second resource; and
   the first terminal device group comprises the first terminal device (101, 201).

5. The method (400) according to any one of claims 1 to 4, wherein the first information comprises information indicating one or more of the following:

   a priority of the second terminal device (102, 202, 203, 204), a priority of a second terminal device group, a priority or priorities of one or more services of the second terminal device, (102, 202, 203, 204) a priority or priorities of one or more services of the second terminal device group, a data volume of the second terminal device (102, 202, 203, 204), or a data volume of the second terminal device group; and
   the second terminal device group comprises the second terminal device (102, 202, 203, 204).

6. The method (400) according to any one of claims 1 to 5, wherein
   the sending (S4420), by the first terminal device (101, 201), second information to the second terminal device (102, 202, 203, 204) comprises:

when the first terminal device (101, 201) successfully receives the first information and the first terminal device agrees to concede a part of the first resource, sending (S420), by the first terminal device (101, 201), the second information to the second terminal device (102, 202, 203, 204); or
the method (400) further comprises:

when the first terminal device (101, 201) successfully receives the first information and the first terminal device (101, 201) does not agree to concede a part of the first resource, sending (S420), by the first terminal device (101, 201), fourth information to the second terminal device (102, 202, 203, 204), wherein the fourth information indicates that the first terminal device (101, 201) does not agree to concede a part of the first resource; or
when the first terminal device (101, 201) fails to receive the first information, sending, by the first terminal device (101, 201), fifth information, wherein the fifth information indicates that the first information is not successfully received.

7. The method (400) according to claim 6, wherein the first information is carried on the second resource, and the second information is carried on a fourth resource; and

an interval between the fourth resource and the second resource is a first duration; or
the first resource is a periodic resource, the fourth resource is a resource in a first period, and the first period is a period after a period of the first resource in which the second resource is located.

8. The method (400) according to claim 1, wherein the method (400) further comprises:
determining (S420), by the first terminal device (101, 201), the third resource according to a resource negotiation criterion.

9. The method (400) according to claim 8, wherein the resource negotiation criterion comprises determining a negotiated resource based on one or more of the following information:

the priority of the first terminal device (101, 201), the priority of the first terminal device group, a priority or priorities of one or more services of the first terminal device (101, 201), a priority or priorities of one or more services of the first terminal device group, a data volume of the first terminal device (101, 201), a data volume of the first terminal device group, the priority of the second terminal device (102, 202, 203, 204), the priority or priorities of the one or more services of the second terminal device (102, 202, 203, 204), the priority or priorities of the one or more services of the second terminal device group, the priority of the second terminal device group, the data volume of the second terminal device (102, 202, 203, 204), or the data volume of the second terminal device group; and
the first terminal device group comprises the first terminal device (101, 201), and the second terminal device group comprises the second terminal device (102, 202, 203, 204).

10. A communication method (400), comprising:

sending (S410), by a second terminal device (102, 202, 203, 204), first information to a first terminal device (101, 201), wherein the first information is used to request the first terminal device (101, 201) to concede a part of a first resource of the first terminal device (101, 201); and
receiving (S420), by the second terminal device (102, 202, 203, 204), the following information sent by the first terminal device (101, 201):

second information, indicating that the first terminal device (101, 201) agrees to concede a part of the first resource for the second terminal device (102, 202, 203, 204); and
wherein the second information comprises first indication information, the first indication information indicates a third resource, and the third resource is a resource that is in the first resource and that is conceded by the first terminal device (101, 201) for the second terminal device (102, 202, 203, 204), or the third resource is a resource the first terminal device (101, 201) stops using in the first resource; and
wherein the first indication information comprises identification information of the third resource;
the first indication information comprises proportion information and resource location information, the proportion information indicates a proportion of the third resource in the first resource, and the resource location information indicates at least one of the following location information of the third resource in the first resource: a time domain start position, a time domain end position, a frequency domain start position, or a frequency domain end position; or

wherein the first indication information comprises the proportion information, and the resource location information is predefined in the protocol or preconfigured in the network.

11. The method (400) according to claim 10, wherein the second terminal device (102, 202, 203, 204) further receives (S420) at least one of the following information sent by the first terminal device (101, 201):

fourth information, indicating that the first terminal device (101, 201) does not agree to concede a part of the first resource; and
fifth information, indicating that the first information is not successfully received.

12. The method (400) according to claim 10, wherein the first information is carried on a second resource, and the second resource is comprised in the first resource; and
a location of the second resource in the first resource is predefined in a protocol or preconfigured in a network; or the method (400) further comprises:
receiving (S420), by the second terminal device (102, 202, 203, 204), third information from the first terminal device, wherein the third information indicates the second resource.

13. A communication apparatus (1100), comprising a processor and a communication interface, wherein the processor performs, through the communication interface, the method (400) according to any one of claims 1 to 9.

14. A communication apparatus (1100), comprising a processor and a communication interface, wherein the processor performs, through the communication interface, the method (400) according to claim 10 or 11.


**Patentansprüche**

1. Kommunikationsverfahren (400), umfassend:

Empfangen (S410) erster Informationen durch eine erste Endgerätevorrichtung (101, 201) aus einer zweiten Endgerätevorrichtung (102, 202, 203, 204), wobei die ersten Informationen verwendet werden, um die erste Endgerätevorrichtung (101, 201) aufzufordern, einen Teil einer ersten Ressource der ersten Endgerätevorrichtung (101, 201) zuzugestehen; und
Senden (S410) zweiter Informationen durch die erste Endgerätevorrichtung (101, 201) an die zweite Endgerätevorrichtung (102, 202, 203, 204), wobei die zweiten Informationen anzeigen, dass die erste Endgerätevorrichtung (101, 201) einwilligt, einen Teil der ersten Ressource für die zweite Endgerätevorrichtung (102, 202, 203, 204) zuzugestehen; und
wobei die zweiten Informationen erste Anzeigeinformationen umfassen, die ersten Anzeigeinformationen eine dritte Ressource anzeigen und die dritte Ressource eine Ressource ist, die sich in der ersten Ressource befindet und die durch die erste Endgerätevorrichtung (101, 201) für die zweite Endgerätevorrichtung (102, 202, 203, 204) zugestanden wird, oder die dritte Ressource eine Ressource ist, deren Verwendung die erste Endgerätevorrichtung (101, 201) in der ersten Ressource beendet; und
wobei die ersten Anzeigeinformationen Identifikationsinformationen der dritten Ressource umfassen;
die ersten Anzeigeinformationen Anteilsinformationen und Ressourcenstandortinformationen umfassen, die Anteilsinformationen einen Anteil der dritten Ressource in der ersten Ressource anzeigen und die Ressourcenstandortinformationen mindestens eine der folgenden Standortinformationen der dritten Ressource in der ersten Ressource anzeigen: eine Startposition des Zeitbereichs, eine Endposition des Zeitbereichs, eine Startposition des Frequenzbereichs oder eine Endposition des Frequenzbereichs; oder
wobei die ersten Anzeigeinformationen die Anteilsinformationen umfassen und die Ressourcenstandortinformationen in dem Protokoll vordefiniert oder in dem Netzwerk vorkonfiguriert sind.

2. Verfahren (400) nach Anspruch 1, wobei die erste Ressource speziell eine Ressource ist, die durch die erste Endgerätevorrichtung (101, 201) oder eine erste Endgerätevorrichtungsgruppe verwendet wird, und die erste Endgerätevorrichtungsgruppe die erste Endgerätevorrichtung (101, 201) umfasst.

3. Verfahren (400) nach Anspruch 1 oder 2, wobei die ersten Informationen auf einer zweiten Ressource übertragen werden und die zweite Ressource in der ersten Ressource enthalten ist; und ein Standort der zweiten Ressource in der ersten Ressource in einem Protokoll vordefiniert oder in einem Netzwerk vorkonfiguriert ist; oder das Verfahren (400) ferner Folgendes umfasst:
Senden dritter Informationen durch die erste Endgerätevorrichtung (101, 201), wobei die dritten Informationen die zweite Ressource anzeigen.

4. Verfahren (400) nach Anspruch 3, wobei das Verfahren (400) ferner Folgendes umfasst:
Senden (S410) einer ersten Nachricht durch die erste Endgerätevorrichtung (101, 201), wobei die erste Nachricht mindestens eine der dritten Informationen oder Informationen umfasst, die eines oder mehrere der folgenden Elemente anzeigen:

eine Zeitbereichsposition der ersten Ressource, eine Frequenzbereichsposition der ersten Ressource, einen Zeitraum der ersten Ressource, eine Priorität der ersten Endgerätevorrichtung (101, 201), eine Priorität der ersten Endgerätevorrichtungsgruppe oder einen Zeitraum der zweiten Ressource; und
die erste Endgerätevorrichtungsgruppe die erste Endgerätevorrichtung (101, 201) umfasst.

5. Verfahren (400) nach einem der Ansprüche 1 bis 4, wobei die ersten Informationen Informationen umfassen, die eines oder mehrere der folgenden Elemente anzeigen:

eine Priorität der zweiten Endgerätevorrichtung (102, 202, 203, 204), eine Priorität einer zweiten Endgerätevorrichtungsgruppe, eine oder mehrere Prioritäten eines oder mehrerer Dienste der zweiten Endgerätevorrichtung (102, 202, 203, 204), eine oder mehrere Prioritäten eines oder mehrerer Dienste der zweiten Endgerätevorrichtungsgruppe, ein Datenvolumen der zweiten Endgerätevorrichtung (102, 202, 203, 204) oder ein Datenvolumen der zweiten Endgerätevorrichtungsgruppe; und
die zweite Endgerätevorrichtungsgruppe die zweite Endgerätevorrichtung (102, 202, 203, 204) umfasst.

6. Verfahren (400) nach einem der Ansprüche 1 bis 5, wobei
das Senden (S4420) von zweiten Informationen durch die erste Endgerätevorrichtung (101, 201) an die zweite Endgerätevorrichtung (102, 202, 203, 204) Folgendes umfasst:

wenn die erste Endgerätevorrichtung (101, 201) die ersten Informationen erfolgreich empfängt und die erste Endgerätevorrichtung einwilligt, einen Teil der ersten Ressource zuzugestehen, Senden (S420) der zweiten Informationen durch die erste Endgerätevorrichtung (101, 201) an die zweite Endgerätevorrichtung (102, 202, 203, 204); oder
das Verfahren (400) ferner Folgendes umfasst:

wenn die erste Endgerätevorrichtung (101, 201) die ersten Informationen erfolgreich empfängt und die erste Endgerätevorrichtung (101, 201) nicht einwilligt, einen Teil der ersten Ressource zuzugestehen, Senden (S420) der vierten Informationen durch die erste Endgerätevorrichtung (101, 201) an die zweite Endgerätevorrichtung (102, 202, 203, 204), wobei die vierten Informationen anzeigen, dass die erste Endgerätevorrichtung (101, 201) nicht einwilligt, einen Teil der ersten Ressource zuzugestehen; oder
wenn die erste Endgerätevorrichtung (101, 201) die ersten Informationen nicht empfängt, Senden von fünften Informationen durch die erste Endgerätevorrichtung (101, 201), wobei die fünften Informationen anzeigen, dass die ersten Informationen nicht erfolgreich empfangen wurden.

7. Verfahren (400) nach Anspruch 6, wobei die ersten Informationen auf der zweiten Ressource übertragen werden und die zweiten Informationen auf einer vierten Ressource übertragen werden; und

ein Intervall zwischen der vierten Ressource und der zweiten Ressource eine erste Dauer ist; oder
die erste Ressource eine periodische Ressource ist, die vierte Ressource eine Ressource in einem ersten Zeitraum ist und der erste Zeitraum ein Zeitraum nach einem Zeitraum der ersten Ressource ist, in welcher sich die zweite Ressource befindet.

8. Verfahren (400) nach Anspruch 1, wobei das Verfahren (400) ferner Folgendes umfasst:
Bestimmen (S420) der dritten Ressource gemäß einem Ressourcenaushandlungskriterium durch die erste Endgerätevorrichtung (101, 201).

9. Verfahren (400) nach Anspruch 8, wobei das Ressourcenaushandlungskriterium das Bestimmen einer ausgehandelten Ressource basierend auf einer oder mehreren der folgenden Informationen umfasst:

die Priorität der ersten Endgerätevorrichtung (101, 201), die Priorität der ersten Endgerätevorrichtungsgruppe, eine oder mehrere Prioritäten eines oder mehrerer Dienste der ersten Endgerätevorrichtung (101, 201), eine oder mehrere Prioritäten eines oder mehrerer Dienste der ersten Endgerätevorrichtungsgruppe, ein Datenvolumen der ersten Endgerätevorrichtung (101, 201), ein Datenvolumen der ersten Endgerätevorrichtungsgruppe, die Priorität der zweiten Endgerätevorrichtung (102, 202, 203, 204), die Priorität oder Prioritäten des einen oder der mehreren Dienste der zweiten Endgerätevorrichtung (102, 202, 203, 204), die Priorität oder Prioritäten des einen oder der mehreren Dienste der zweiten Endgerätevorrichtungsgruppe, die Priorität der zweiten Endgerätevorrichtungsgruppe, das Datenvolumen der zweiten Endgerätevorrichtung (102, 202, 203, 204) oder das Datenvolumen der zweiten Endgerätevorrichtungsgruppe; und

wobei die erste Endgerätevorrichtungsgruppe die erste Endgerätevorrichtung (101, 201) umfasst und die zweite Endgerätevorrichtungsgruppe die zweite Endgerätevorrichtung (102, 202, 203, 204) umfasst.

10. Kommunikationsverfahren (400), umfassend:

Senden (S410) erster Informationen durch eine zweite Endgerätevorrichtung (102, 202, 203, 204) an eine ersten Endgerätevorrichtung (101, 201), wobei die ersten Informationen verwendet werden, um die erste Endgerätevorrichtung (101, 201) aufzufordern, einen Teil einer ersten Ressource der ersten Endgerätevorrichtung (101, 201) zuzugestehen; und

Empfangen (S420), durch die zweite Endgerätevorrichtung (102, 202, 203, 204), der folgenden Informationen, die durch die erste Endgerätevorrichtung (101, 201) gesendet werden:

zweite Informationen, die anzeigen, dass die erste Endgerätevorrichtung (101, 201) einwilligt, einen Teil der ersten Ressource für die zweite Endgerätevorrichtung (102, 202, 203, 204) zuzugestehen; und

wobei die zweiten Informationen erste Anzeigeinformationen umfassen, die ersten Anzeigeinformationen eine dritte Ressource anzeigen und die dritte Ressource eine Ressource ist, die sich in der ersten Ressource befindet und die durch die erste Endgerätevorrichtung (101, 201) für die zweite Endgerätevorrichtung (102, 202, 203, 204) zugestanden wird, oder die dritte Ressource eine Ressource ist, deren Verwendung die erste Endgerätevorrichtung (101, 201) in der ersten Ressource beendet; und

wobei die ersten Anzeigeinformationen Identifikationsinformationen der dritten Ressource umfassen; die ersten Anzeigeinformationen Anteilsinformationen und Ressourcenstandortinformationen umfassen, die Anteilsinformationen einen Anteil der dritten Ressource in der ersten Ressource anzeigen und die Ressourcenstandortinformationen mindestens eine der folgenden Standortinformationen der dritten Ressource in der ersten Ressource anzeigen: eine Startposition des Zeitbereichs, eine Endposition des Zeitbereichs, eine Startposition des Frequenzbereichs oder eine Endposition des Frequenzbereichs; oder

wobei die ersten Anzeigeinformationen die Anteilsinformationen umfassen und die Ressourcenstandortinformationen in dem Protokoll vordefiniert oder in dem Netzwerk vorkonfiguriert sind.

11. Verfahren (400) nach Anspruch 10, wobei die zweite Endgerätevorrichtung (102, 202, 203, 204) ferner mindestens eine der folgenden Informationen empfängt (S420), die durch die erste Endgerätevorrichtung (101, 201) gesendet werden:

vierte Informationen, die anzeigen, dass die erste Endgerätevorrichtung (101, 201) nicht einwilligt, einen Teil der ersten Ressource zuzugestehen; und

fünfte Informationen, die anzeigen, dass die ersten Informationen nicht erfolgreich empfangen wurden.

12. Verfahren (400) nach Anspruch 10, wobei die ersten Informationen auf einer zweiten Ressource übertragen werden und die zweite Ressource in der ersten Ressource enthalten ist; und ein Standort der zweiten Ressource in der ersten Ressource in einem Protokoll vordefiniert oder in einem Netzwerk vorkonfiguriert ist; oder das Verfahren (400) ferner Folgendes umfasst:

Empfangen (S420) dritter Informationen aus der ersten Endgerätevorrichtung durch die zweite Endgerätevorrichtung (102, 202, 203, 204), wobei die dritten Informationen die zweite Ressource anzeigen.

13. Kommunikationseinrichtung (1100), umfassend einen Prozessor und eine Kommunikationsschnittstelle, wobei der Prozessor das Verfahren (400) nach einem der Ansprüche 1 bis 9 über die Kommunikationsschnittstelle durchführt.

14. Kommunikationseinrichtung (1100), umfassend einen Prozessor und eine Kommunikationsschnittstelle, wobei der Prozessor das Verfahren (400) nach Anspruch 10 oder 11 über die Kommunikationsschnittstelle durchführt.

**Revendications**

1. Procédé de communication (400), comprenant :

   la réception (S410), par un premier dispositif terminal (101, 201), de premières informations provenant d'un second dispositif terminal (102, 202, 203, 204), dans lequel les premières informations sont utilisées pour demander au premier dispositif terminal (101, 201) de concéder une partie d'une première ressource du premier dispositif terminal (101, 201) ; et

   l'envoi (S410), par le premier dispositif terminal (101, 201), de deuxièmes informations au second dispositif terminal (102, 202, 203, 204), dans lequel les deuxièmes informations indiquent que le premier dispositif terminal (101, 201) accepte de concéder une partie de la première ressource au second dispositif terminal (102, 202, 203, 204) ; et

   dans lequel les deuxièmes informations comprennent des premières informations d'indication, les premières informations d'indication indiquent une troisième ressource, et la troisième ressource est une ressource qui se trouve dans la première ressource et qui est concédée par le premier dispositif terminal (101, 201) pour le second dispositif terminal (102, 202, 203, 204), ou la troisième ressource est une ressource que le premier dispositif terminal (101, 201) cesse d'utiliser dans la première ressource ; et

   dans lequel les premières informations d'indication comprennent des informations d'identification de la troisième ressource ;

   les premières informations d'indication comprennent des informations de proportion et des informations d'emplacement de ressource, les informations de proportion indiquent une proportion de la troisième ressource dans la première ressource, et les informations d'emplacement de ressource indiquent au moins l'une des informations d'emplacement suivantes de la troisième ressource dans la première ressource : une position de début dans le domaine temporel, une position de fin dans le domaine temporel, une position de début dans le domaine fréquentiel ou une position de fin dans le domaine fréquentiel ; ou

   dans lequel les premières informations d'indication comprennent les informations de proportion, et les informations d'emplacement de ressource sont prédéfinies dans le protocole ou préconfigurées dans le réseau.

2. Procédé (400) selon la revendication 1, dans lequel la première ressource est spécifiquement une ressource utilisée par le premier dispositif terminal (101, 201) ou un premier groupe de dispositifs terminaux, et le premier groupe de dispositifs terminaux comprend le premier dispositif terminal (101, 201).

3. Procédé (400) selon la revendication 1 ou 2, dans lequel les premières informations sont transportées sur une deuxième ressource, et la deuxième ressource est comprise dans la première ressource ; et

   un emplacement de la deuxième ressource dans la première ressource est prédéfini dans un protocole ou préconfiguré dans un réseau ; ou le procédé (400) comprend également :

   l'envoi, par le premier dispositif terminal (101, 201), de troisièmes informations, dans lequel les troisièmes informations indiquent la deuxième ressource.

4. Procédé (400) selon la revendication 3, dans lequel le procédé (400) comprend également :
   l'envoi (S410), par le premier dispositif terminal (101, 201), d'un premier message, dans lequel le premier message comprend au moins l'une des troisièmes informations ou des informations indiquant un ou plusieurs des éléments suivants :

   une position dans le domaine temporel de la première ressource, une position dans le domaine fréquentiel de la première ressource, une période de la première ressource, une priorité du premier dispositif terminal (101, 201), une priorité du premier groupe de dispositifs terminaux, ou une période de la deuxième ressource ; et

   le premier groupe de dispositifs terminaux comprend le premier dispositif terminal (101, 201).

5. Procédé (400) selon l'une quelconque des revendications 1 à 4, dans lequel les premières informations comprennent des informations indiquant un ou plusieurs des éléments suivants :

   une priorité du second dispositif terminal (102, 202, 203, 204), une priorité d'un second groupe de dispositifs terminaux, une priorité ou des priorités d'un ou de plusieurs services du second dispositif terminal, (102, 202, 203, 204) une priorité ou des priorités d'un ou de plusieurs services du second groupe de dispositifs terminaux, un volume de données du second dispositif terminal (102, 202, 203, 204), ou un volume de données du second groupe de dispositifs terminaux ; et

   le second groupe de dispositifs terminaux comprend le second dispositif terminal (102, 202, 203, 204).

**6.** Procédé (400) selon l'une quelconque des revendications 1 à 5, dans lequel
l'envoi (S4420), par le premier dispositif terminal (101, 201), de deuxièmes informations au second dispositif terminal (102, 202, 203, 204) comprend :

lorsque le premier dispositif terminal (101, 201) reçoit avec succès les premières informations et que le premier dispositif terminal accepte de concéder une partie de la première ressource, l'envoi (S420), par le premier dispositif terminal (101, 201), des deuxièmes informations au second dispositif terminal (102, 202, 203, 204) ; ou le procédé (400) comprend également :

lorsque le premier dispositif terminal (101, 201) reçoit avec succès les premières informations et que le premier dispositif terminal (101, 201) n'accepte pas de concéder une partie de la première ressource, l'envoi (S420), par le premier dispositif terminal (101, 201), de quatrièmes informations au second dispositif terminal (102, 202, 203, 204), dans lequel les quatrièmes informations indiquent que le premier dispositif terminal (101, 201) n'accepte pas de concéder une partie de la première ressource ; ou lorsque le premier dispositif terminal (101, 201) ne parvient pas à recevoir les premières informations, l'envoi, par le premier dispositif terminal (101, 201), de cinquièmes informations, dans lequel les cinquièmes informations indiquent que les premières informations n'ont pas été reçues avec succès.

**7.** Procédé (400) selon la revendication 6, dans lequel les premières informations sont transportées sur la deuxième ressource, et les deuxièmes informations sont transportées sur une quatrième ressource ; et

un intervalle entre la quatrième ressource et la deuxième ressource est une première durée ; ou la première ressource est une ressource périodique, la quatrième ressource est une ressource dans une première période, et la première période est une période après une période de la première ressource dans laquelle se trouve la deuxième ressource.

**8.** Procédé (400) selon la revendication 1, dans lequel le procédé (400) comprend également :
la détermination (S420), par le premier dispositif terminal (101, 201), de la troisième ressource selon un critère de négociation de ressource.

**9.** Procédé (400) selon la revendication 8, dans lequel le critère de négociation de ressource comprend la détermination d'une ressource négociée sur la base d'une ou de plusieurs des informations suivantes :

la priorité du premier dispositif terminal (101, 201), la priorité du premier groupe de dispositifs terminaux, une priorité ou des priorités d'un ou de plusieurs services du premier dispositif terminal (101, 201), une priorité ou des priorités d'un ou de plusieurs services du premier groupe de dispositifs terminaux, un volume de données du premier dispositif terminal (101, 201), un volume de données du premier groupe de dispositifs terminaux, la priorité du second dispositif terminal (102, 202, 203, 204), la priorité ou les priorités des un ou plusieurs services du second dispositif terminal (102, 202, 203, 204), la priorité ou les priorités des un ou plusieurs services du second groupe de dispositifs terminaux, la priorité du second groupe de dispositifs terminaux, le volume de données du second dispositif terminal (102, 202, 203, 204), ou le volume de données du second groupe de dispositifs terminaux ; et
le premier groupe de dispositifs terminaux comprend le premier dispositif terminal (101, 201), et le second groupe de dispositifs terminaux comprend le second dispositif terminal (102, 202, 203, 204).

**10.** Procédé de communication (400), comprenant :

l'envoi (S410), par un second dispositif terminal (102, 202, 203, 204), de premières informations à un premier dispositif terminal (101, 201), dans lequel les premières informations sont utilisées pour demander au premier dispositif terminal (101, 201) de concéder une partie d'une première ressource du premier dispositif terminal (101, 201) ; et
la réception (S420), par le second dispositif terminal (102, 202, 203, 204), des informations suivantes envoyées par le premier dispositif terminal (101, 201) :

des deuxièmes informations, indiquant que le premier dispositif terminal (101, 201) accepte de concéder une partie de la première ressource au second dispositif terminal (102, 202, 203, 204) ; et
dans lequel les deuxièmes informations comprennent des premières informations d'indication, les premières informations d'indication indiquent une troisième ressource, et la troisième ressource est une ressource qui se trouve dans la première ressource et qui est concédée par le premier dispositif terminal (101, 201) pour le second dispositif terminal (102, 202, 203, 204), ou la troisième ressource est une ressource que le premier dispositif terminal (101, 201) cesse d'utiliser dans la première ressource ; et

dans lequel les premières informations d'indication comprennent des informations d'identification de la troisième ressource ;

les premières informations d'indication comprennent des informations de proportion et des informations d'emplacement de ressource, les informations de proportion indiquent une proportion de la troisième ressource dans la première ressource, et les informations d'emplacement de ressource indiquent au moins l'une des informations d'emplacement suivantes de la troisième ressource dans la première ressource : une position de début dans le domaine temporel, une position de fin dans le domaine temporel, une position de début dans le domaine fréquentiel ou une position de fin dans le domaine fréquentiel ; ou

dans lequel les premières informations d'indication comprennent les informations de proportion, et les informations d'emplacement de ressource sont prédéfinies dans le protocole ou préconfigurées dans le réseau.

11. Procédé (400) selon la revendication 10, dans lequel le second dispositif terminal (102, 202, 203, 204) reçoit également (S420) au moins l'une des informations suivantes envoyées par le premier dispositif terminal (101, 201) :

des quatrièmes informations, indiquant que le premier dispositif terminal (101, 201) n'accepte pas de concéder une partie de la première ressource ; et

des cinquièmes informations, indiquant que les premières informations n'ont pas été reçues avec succès.

12. Procédé (400) selon la revendication 10, dans lequel les premières informations sont transportées sur une deuxième ressource, et la deuxième ressource est comprise dans la première ressource ; et

un emplacement de la deuxième ressource dans la première ressource est prédéfini dans un protocole ou préconfiguré dans un réseau ; ou le procédé (400) comprend également :

la réception (S420), par le second dispositif terminal (102, 202, 203, 204), de troisièmes informations provenant du premier dispositif terminal, dans lequel les troisièmes informations indiquent la deuxième ressource.

13. Appareil de communication (1100), comprenant un processeur et une interface de communication, dans lequel le processeur effectue, par le biais de l'interface de communication, le procédé (400) selon l'une quelconque des revendications 1 à 9.

14. Appareil de communication (1100), comprenant un processeur et une interface de communication, dans lequel le processeur effectue, par le biais de l'interface de communication, le procédé (400) selon la revendication 10 ou 11.

100

101

102

FIG. 1

200

201

202

203

204

FIG. 2

300

```
┌─────────────────────────────────┐
│ 1: Decode SCI of another terminal device, and │
│    measure receive power of a corresponding     │
│                  PSSCH                          │
└─────────────────────────────────┘
```

```
┌─────────────────────────────────┐
│ 2: Exclude a resource occupied by a terminal │
│ device and a resource with high interference, │
│ and use a remaining resource in a candidate │
│           timeslot as a candidate            │
└─────────────────────────────────┘
```

```
┌─────────────────────────────┐
│ 5: Increase a threshold of │
│    the receive power        │
└─────────────────────────────┘
```

3: A quantity
of candidate resources is greater
than or equal to 20% of Mt

```
┌─────────────────────────────────┐
│ 4: A physical layer reports to a higher layer to │
│ select, from the candidate resource, a resource │
│              for communication                  │
└─────────────────────────────────┘
```

FIG. 3

400

| First terminal device | | Second terminal device |

S410: Send first information used to request the first terminal device to concede a part of a first resource of the first terminal device

S420: Send second information indicating that the first terminal device agrees to concede a part of the first resource for the second terminal device

FIG. 4

First resource

▨ Resource used to carry a first message

▨ Second resource

FIG. 5

EP 4 262 308 B1

▯ LBT     ▨ Broadcast message     ▦ Negotiation request information

G1,
T: 5 milliseconds,
P: 30 milliseconds

G2
T: 20 milliseconds,
P: 30 milliseconds

G3
T: 5 milliseconds,
P: 30 milliseconds

G1,
T: 5 milliseconds,
P: 30 milliseconds

G2
T: 20 milliseconds,
P: 30 milliseconds

G3
T: 5 milliseconds,
P: 30 milliseconds

Detect/Monitor
the broadcast
message

G4

FIG. 6

▯ LBT          ▨ Broadcast message          ▩ Negotiation request information

| G1, | G2 | G3 | G1, | G2 | G3 |
| T: 5 milliseconds, | T: 20 milliseconds, | T: 5 milliseconds, | T: 5 milliseconds, | T: 20 milliseconds, | T: 5 milliseconds, |
| P: 30 milliseconds | P: 30 milliseconds | P: 30 milliseconds | P: 30 milliseconds | P: 30 milliseconds | P: 30 milliseconds |

A GH 4 sends the
negotiation request
information

FIG. 7

800

S810: Calculate a proportion of a negotiated resource according to a resource negotiation decision criterion

S820: Calculate a 2-norm between the proportion of the negotiated resource and each quantized proportion

S830: Determine a minimum 2-norm value, where a proportion corresponding to the minimum 2-norm value is a quantized proportion of the negotiated resource

FIG. 8

LBT

Broadcast message

Negotiation request information

G1 G2 G4 G3 G1 G2 G4 G3

Third resource

Third resource

First duration

A GH 2 sends second information

...

FIG. 9

▯ LBT    ▨ Broadcast message and second information    ▧ Negotiation request information

G1    G2    G3    G1    G2    G4    G3

A GH 4 sends the
negotiation request
information

Period N

A GH 2 sends the
second information

Period N+1

Third
resource

FIG. 10

FIG. 11

FIG. 12

1300

FIG. 13

**REFERENCES CITED IN THE DESCRIPTION**

**Patent documents cited in the description**

- CN 202110121292
- CN 202110542230
- WO 2020114129 A1
- WO 2019170084 A1